(19) Europäisches Patentamt

European Patent Office

Office européen des brevets

(11) **EP 4 422 316 A1**

(12) **EUROPEAN PATENT APPLICATION**
published in accordance with Art. 153(4) EPC

(43) Date of publication:
**28.08.2024 Bulletin 2024/35**

(21) Application number: **22897614.8**

(22) Date of filing: **09.11.2022**

(51) International Patent Classification (IPC):
**H04W 72/04** *(2023.01)*

(52) Cooperative Patent Classification (CPC):
**H04W 4/40; H04W 72/04; H04W 72/0453;
H04W 72/542**

(86) International application number:
**PCT/CN2022/130887**

(87) International publication number:
**WO 2023/093531 (01.06.2023 Gazette 2023/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.11.2021 CN 202111406834**

(71) Applicant: **Huawei Technologies Co., Ltd.
Shenzhen, Guangdong 518129 (CN)**

(72) Inventors:
• **GUO, Wenting**
**Shenzhen, Guangdong 518129 (CN)**
• **SU, Hongjia**
**Shenzhen, Guangdong 518129 (CN)**
• **LU, Lei**
**Shenzhen, Guangdong 518129 (CN)**

(74) Representative: **MERH-IP Matias Erny Reichl
Hoffmann
Patentanwälte PartG mbB
Paul-Heyse-Strasse 29
80336 München (DE)**

(54) **COMMUNICATION METHOD AND APPARATUS**

(57)   This application belongs to the field of communication technologies, and discloses a communication method and apparatus, to send and receive feedback information in a multi-carrier scenario, so as to improve feedback efficiency and resource utilization. The method includes: receiving sidelink data from a second apparatus from a plurality of frequency domain resource sets on a plurality of carriers in a first slot, where each of the plurality of carriers includes at least one frequency domain resource set (S1401); determining a feedback resource from a plurality of candidate feedback resources corresponding to the plurality of frequency domain resource sets, where a candidate feedback resource is configured in each of the plurality of frequency domain resource sets, the feedback resource belongs to one of the plurality of frequency domain resource sets in frequency domain, and the feedback resource is located in a second slot in time domain (S1402); and sending feedback information of the sidelink data to the second apparatus on the feedback resource (S1403).

FIG. 14

**Description**

**CROSS-REFERENCE TO RELATED APPLICATIONS**

This application claims priority to Chinese Patent Application No. 202111406834.9, filed with the China National Intellectual Property Administration on November 24, 2021 and entitled "COMMUNICATION METHOD AND APPARATUS", which is incorporated herein by reference in its entirety.

**TECHNICAL FIELD**

Embodiments of this application relate to the field of communication technologies, and in particular, to a communication method and apparatus.

**BACKGROUND**

With development of wireless communication technologies, people have increasing requirements for a high data rate and user experience, and have increasing requirements for a proximity service for knowing and communicating with people or things around. Therefore, device-to-device (device-to-device, D2D) communication emerges. Application of the D2D communication can reduce load of a cellular network, reduce battery power consumption of a device, and well meet a service requirement. The D2D communication allows a plurality of devices supporting a D2D function to perform direct discovery and direct communication in a case of network coverage or no network coverage. Vehicle-to-everything (vehicle-to-anything, V2X) may be considered as a special case of the D2D communication. The V2X communication includes vehicle-to-vehicle (vehicle-to-vehicle, V2V) communication, vehicle-to-pedestrian (vehicle-to-pedestrian, V2P) communication, vehicle-to-infrastructure (vehicle-to-infrastructure, V2I) communication, vehicle-to-network (vehicle-to-network, V2N) communication, and the like. V2V means sidelink (sidelink, SL) communication between vehicles or vehicle-mounted devices.

To cope with an increasing amount of sidelink data between devices, a carrier aggregation (carrier aggregation, CA) technology or another multicarrier technology similar to CA may be introduced in the SL communication, to send and receive sidelink data on a plurality of carriers. Therefore, how to send and receive feedback information in a multicarrier scenario is a problem worth considering.

**SUMMARY**

Embodiments of this application provide a communication method and apparatus, to send and receive feedback information in a multicarrier scenario, so as to improve feedback efficiency and resource utilization.

Currently, a throughput requirement increases sharply in a V2X communication scenario such as vehicle-mounted communication. For example, in a remote driving scenario, a data throughput requirement of each vehicle is about 50 megabits per second (megabits per second, Mbps), and in a vehicle-mounted entertainment scenario, a data throughput requirement of two consecutive vehicles is about 1 gigabit per second (gigabit per second, Gbps). However, an available frequency band bandwidth of a current intelligent transportation system (intelligent transportation system, ITS) is only 75 megahertz (megahertz, MHz), and cannot meet a capacity requirement of the vehicle-mounted communication. Spectrum resources for wireless communication are scarce resources, especially contiguous spectrums with a large bandwidth. Therefore, carrier aggregation may be introduced in a communication system as a solution. In the carrier aggregation, two or more component carriers (component carriers, CCs) are aggregated to support a larger transmission bandwidth. The solution provides a new idea for supporting V2X service requirements in the future. In a possible scenario, a hybrid automatic repeat request (hybrid automatic repeat request, HARQ)-acknowledgment (ACK) information feedback needs to be supported at a physical layer, to obtain higher physical transmission reliability. Because feedback resource configurations on carriers are different, how to determine a feedback resource in a carrier aggregation scenario becomes an urgent problem to be resolved. A simple method is to feed back, on each carrier based on a conventional technology, HARQ-ACK feedback information on the carrier. If feedback resources on the carriers overlap in time domain, a receive end simultaneously sends feedback information on non-contiguous spectrum resources in a same slot. As a result, power is scattered, a peak to average power ratio (peak to average power ratio, PAPR) increases, and transmission efficiency decreases. Alternatively, if feedback resources on the carriers do not overlap in time domain, there is an energy consumption problem in a plurality of times of sending, and effectiveness of the feedback information becomes a challenge. In embodiments of this application, a feedback resource for sending feedback information in a multicarrier scenario may be determined based on information such as a channel state of each resource pool in the multicarrier scenario, to improve a success rate of sending the feedback information, so as to obtain gains in performance and power consumption.

According to a first aspect, an embodiment of this application provides a communication method. An execution body (for example, a first apparatus) of the method may be a terminal device or a network device, or may be a combined component or part that has a function of the terminal device or a function of the network device, or may be a communication chip (for example, a processor, a baseband chip, or a chip system) used in the terminal device or the network device. The method includes: receiving sidelink data from a second apparatus from a plurality of frequency domain resource sets on a plurality of carriers in a first slot, where each of the plurality of carriers includes at least one frequency domain resource set; determining a feedback resource from a plurality of candidate feedback resources corresponding to the plurality of frequency domain resource sets, where a candidate feedback resource is configured in each of the plurality of frequency domain resource sets, the feedback resource belongs to one of the plurality of frequency domain resource sets in frequency domain, and the feedback resource is located in a second slot in time domain; and sending feedback information of the sidelink data to the second apparatus on the feedback resource.

For example, the method provided in the first aspect may also be described as follows: receiving sidelink data from a second apparatus from a plurality of frequency domain resource sets on a plurality of carriers in a first slot, where each of the plurality of carriers includes at least one frequency domain resource set; determining a feedback resource, where the feedback resource belongs to one of the plurality of frequency domain resource sets in frequency domain, and the feedback resource is located in a second slot in time domain; and sending feedback information of the sidelink data to the second apparatus on the feedback resource.

According to the method, when the sidelink data is sent and received in the plurality of frequency domain resource sets on the plurality of carriers, for example, in a scenario in which CA or a similar technology is supported, the first apparatus may determine, in one frequency domain resource set on one carrier, the feedback resource for sending the feedback information, so that feedback information can be sent in a multicarrier scenario. In addition, the first apparatus determines, in the one frequency domain resource set on the one carrier, the feedback resource for sending the feedback information, so that mutual interference caused between feedback information when the feedback information is simultaneously sent in the plurality of frequency domain resource sets on the plurality of carriers can be avoided, thereby improving a success rate of sending the feedback information. In addition, overheads of signaling, a processing resource, and the like that are caused by sending the feedback information by the first apparatus and receiving the feedback information by the second apparatus can be reduced, thereby improving feedback efficiency and resource utilization.

In a possible design, the determining a feedback resource from a plurality of candidate feedback resources corresponding to the plurality of frequency domain resource sets includes: determining a candidate feedback resource configured in a first frequency domain resource set as the feedback resource, where the first frequency domain resource set is a frequency domain resource set with a largest signal to noise ratio (signal to interference plus noise ratio, SINR) of receiving the sidelink data in the plurality of frequency domain resource sets. Alternatively, the determining a feedback resource includes: determining the feedback resource in a first frequency domain resource set in the second slot, where the first frequency domain resource set is a frequency domain resource set with a largest SINR of receiving the sidelink data in the plurality of frequency domain resource sets.

In the design, the frequency domain resource set in which the feedback resource is located in frequency domain may be determined based on an SINR of receiving the sidelink data in each frequency domain resource set on the plurality of carriers, and then the candidate feedback resource configured in the frequency domain resource set is determined as the feedback resource, so that a success rate of sending feedback information can be improved.

In a possible design, the determining a feedback resource from a plurality of candidate feedback resources corresponding to the plurality of frequency domain resource sets includes: determining a candidate feedback resource configured in a first frequency domain resource set as the feedback resource, where the first frequency domain resource set is a frequency domain resource set with a smallest channel busy ratio (channel busy ratio, CBR) in the plurality of frequency domain resource sets. Alternatively, the determining a feedback resource includes: determining the feedback resource in a first frequency domain resource set in the second slot, where the first frequency domain resource set is a frequency domain resource set with a smallest CBR in the plurality of frequency domain resource sets.

In the design, the frequency domain resource set in which the feedback resource is located in frequency domain may be determined based on a CBR of each frequency domain resource set on the plurality of carriers, and then the candidate feedback resource configured in the frequency domain resource set is determined as the feedback resource, so that a success rate of sending feedback information can be improved.

In a possible design, the method further includes: receiving indication information from a network device, where the indication information indicates a first frequency domain resource set, and the first frequency domain resource set is one of the plurality of frequency domain resource sets. Optionally, the determining a feedback resource from a plurality of candidate feedback resources corresponding to the plurality of frequency domain resource sets includes: determining a candidate feedback resource configured in the first frequency domain resource set as the feedback resource. Alternatively, optionally, the determining a feedback resource includes: determining the feedback resource in the first frequency domain resource set in the second slot.

In the design, the frequency domain resource set in which the feedback resource is located in frequency domain may be determined based on an indication of the network device, and then the candidate feedback resource configured in the frequency domain resource set is determined as the feedback resource. This helps avoid a conflict of feedback resources between devices (or apparatuses), and improve a success rate of sending feedback information.

In a possible design, the determining a feedback resource from a plurality of candidate feedback resources corresponding to the plurality of frequency domain resource sets includes: determining a candidate feedback resource configured in a first frequency domain resource set as the feedback resource, where the first frequency domain resource set is a frequency domain resource set that is predefined in the plurality of frequency domain resource sets and that is used to send the feedback information. Alternatively, the determining a feedback resource includes: determining the feedback resource in a first frequency domain resource set in the second slot, where the first frequency domain resource set is a frequency domain resource set that is predefined in the plurality of frequency domain resource sets and that is used to send the feedback information.

In a possible design, the determining a feedback resource from a plurality of candidate feedback resources corresponding to the plurality of frequency domain resource sets includes: determining a candidate feedback resource in an earliest slot in the plurality of candidate feedback resources as the feedback resource. Alternatively, the determining a feedback resource includes: determine the feedback resource in a first frequency domain resource set in the second slot, where a candidate feedback resource that can be used to send the feedback information is configured in each of the plurality of frequency domain resource sets, the first frequency domain resource set is a frequency domain resource set that is in the plurality of frequency domain resource sets and in which a configured candidate feedback resource is located in an earliest slot, and the second slot is a slot in which the candidate feedback resource configured in the first frequency domain resource set is located.

In the design, when slots in which candidate feedback resources configured in the plurality of frequency domain resource sets are located are not aligned, the candidate feedback resource in the earliest slot may be determined as the feedback resource. This helps reduce a delay of sending feedback information.

In a possible design, the determining a feedback resource from a plurality of candidate feedback resources corresponding to the plurality of frequency domain resource sets includes: determining a candidate feedback resource in an earliest slot in at least one candidate feedback resource configured in at least one first frequency domain resource set as the feedback resource, where the at least one first frequency domain resource set is at least one frequency domain resource set with a largest SINR of receiving the sidelink data in the plurality of frequency domain resource sets. Alternatively, the determining a feedback resource includes: determining the feedback resource in a first frequency domain resource set in the second slot, where a candidate feedback resource that can be used to send the feedback information is configured in each of the plurality of frequency domain resource sets, the first frequency domain resource set is a frequency domain resource set with a largest SINR of receiving the sidelink data that is in the plurality of frequency domain resource sets and in which a configured candidate feedback resource is located in an earliest slot, and the second slot is a slot in which the candidate feedback resource configured in the first frequency domain resource set is located.

In the design, starting from SINRs of the frequency domain resource sets and slots in which the feedback resources in the frequency domain resource sets are located, the candidate feedback resource in the earliest slot may be selected from the at least one candidate feedback resource configured in the at least one frequency domain resource set with the largest SINR, and is determined as the feedback resource, so that a success rate of sending feedback information can be improved, thereby reducing a delay of sending the feedback information.

In a possible design, the determining a feedback resource from a plurality of candidate feedback resources corresponding to the plurality of frequency domain resource sets includes: determining a candidate feedback resource in an earliest slot in at least one candidate feedback resource configured in at least one first frequency domain resource set as the feedback resource, where the at least one first frequency domain resource set is at least one frequency domain resource set with a smallest CBR in the plurality of frequency domain resource sets. Alternatively, the determining a feedback resource includes: determining the feedback resource in a first frequency domain resource set in the second slot, where a candidate feedback resource that can be used to send the feedback information is configured in each of the plurality of frequency domain resource sets, the first frequency domain resource set is a frequency domain resource set with a smallest CBR that is in the plurality of frequency domain resource sets and in which a configured candidate feedback resource is located in an earliest slot, and the second slot is a slot in which the candidate feedback resource configured in the first frequency domain resource set is located.

In the design, starting from CBRs of the frequency domain resource sets and slots in which the feedback resources in the frequency domain resource sets are located, the candidate feedback resource in the earliest slot may be selected from the at least one candidate feedback resource configured in the at least one frequency domain resource set with the smallest CBR, and is determined as the feedback resource, so that a success rate of sending feedback information can be improved, thereby reducing a delay of sending the feedback information.

According to a second aspect, an embodiment of this application provides a communication method. An execution body (for example, a second apparatus) of the method may be a terminal device or a network device, or may be a combined component or part that has a function of the terminal device or a function of the network device, or may be a communication chip (for example, a processor, a baseband chip, or a chip system) used in the terminal device or the network device. The method includes: sending sidelink data to a first apparatus in a plurality of frequency domain resource sets on a plurality of carriers in a first slot, where each of the plurality of carriers includes at least one frequency domain resource set; determining a feedback resource from a plurality of candidate feedback resources corresponding to the plurality of frequency domain resource sets, where a candidate feedback resource is configured in each of the plurality of frequency domain resource sets, the feedback resource belongs to one of the plurality of frequency domain resource sets in frequency domain, and the feedback resource is located in a second slot in time domain; and receiving feedback information of the sidelink data from the first apparatus on the feedback resource.

For example, the method provided in the second aspect may also be described as follows: sending sidelink data to a first apparatus in a plurality of frequency domain resource sets on a plurality of carriers in a first slot, where each of the plurality of carriers includes at least one frequency domain resource set; determining a feedback resource, where the feedback resource belongs to one of the plurality of frequency domain resource sets in frequency domain, and the feedback resource is located in a second slot in time domain; and receiving feedback information of the sidelink data from the first apparatus on the feedback resource.

According to the method, when the sidelink data is sent and received in the plurality of frequency domain resource sets on the plurality of carriers, the second apparatus may determine, in one frequency domain resource set on one carrier, the feedback resource for receiving the feedback information, so that feedback information can be received in a multicarrier scenario. In addition, the second apparatus determines, in the one frequency domain resource set on the one carrier, the feedback resource for receiving the feedback information, so that mutual interference caused between feedback information when the feedback information is simultaneously received in the plurality of frequency domain resource sets on the plurality of carriers can be avoided, thereby improving a success rate of receiving the feedback information. In addition, overheads of signaling, a processing resource, and the like that are caused by sending the feedback information by the first apparatus and receiving the feedback information by the second apparatus can be reduced, thereby improving feedback efficiency and resource utilization.

In a possible design, the method further includes: receiving SINR information from the first apparatus, where the SINR information includes an SINR of receiving the sidelink data by the first apparatus in each of the plurality of frequency domain resource sets; and the determining a feedback resource from a plurality of candidate feedback resources corresponding to the plurality of frequency domain resource sets includes: determining a candidate feedback resource configured in a first frequency domain resource set as the feedback resource, where the first frequency domain resource set is a frequency domain resource set with a largest SINR in the plurality of frequency domain resource sets. Alternatively, the method further includes: receiving SINR information from the first apparatus, where the SINR information includes an SINR of receiving the sidelink data by the first apparatus in each of the plurality of frequency domain resource sets; and the determining a feedback resource includes: determining the feedback resource in a first frequency domain resource set in the second slot, where the first frequency domain resource set is a frequency domain resource set with a largest SINR in the plurality of frequency domain resource sets.

In the design, the frequency domain resource set in which the feedback resource is located in frequency domain may be determined based on the SINR of receiving the sidelink data by the receive end of the sidelink data in each frequency domain resource set on the plurality of carriers, and then the candidate feedback resource configured in the frequency domain resource set is determined as the feedback resource, so that a success rate of receiving feedback information can be improved.

In a possible design, the method further includes: receiving CBR information from the first apparatus, where the CBR information includes a CBR of each of the plurality of frequency domain resource sets; and the determining a feedback resource from a plurality of candidate feedback resources corresponding to the plurality of frequency domain resource sets includes: determining a candidate feedback resource configured in a first frequency domain resource set as the feedback resource, where the first frequency domain resource set is a frequency domain resource set with a smallest CBR in the plurality of frequency domain resource sets. Alternatively, the method further includes: receiving CBR information from the first apparatus, where the CBR information includes a CBR of each of the plurality of frequency domain resource sets; and the determining a feedback resource includes: determining the feedback resource in a first frequency domain resource set in the second slot, where the first frequency domain resource set is a frequency domain resource set with a smallest CBR in the plurality of frequency domain resource sets.

In the design, the frequency domain resource set in which the feedback resource is located in frequency domain may be determined based on the CBR that is of each frequency domain resource set on the plurality of carriers and that is obtained by the receive end of the sidelink data, and then the candidate feedback resource configured in the frequency domain resource set is determined as the feedback resource, so that a success rate of receiving feedback information can be improved.

In a possible design, the method further includes: receiving indication information from a network device, where the indication information indicates a first frequency domain resource set, and the first frequency domain resource set is one of the plurality of frequency domain resource sets. Optionally, the determining a feedback resource from a plurality of candidate feedback resources corresponding to the plurality of frequency domain resource sets includes: determining a candidate feedback resource configured in the first frequency domain resource set as the feedback resource. Alternatively, optionally, the determining a feedback resource includes: determining the feedback resource in the first frequency domain resource set in the second slot.

In the design, the frequency domain resource set in which the feedback resource is located in frequency domain may be determined based on an indication of the network device, and then the candidate feedback resource configured in the frequency domain resource set is determined as the feedback resource. This helps avoid a conflict of feedback resources between devices (or apparatuses), and improve a success rate of receiving feedback information.

In a possible design, the determining a feedback resource from a plurality of candidate feedback resources corresponding to the plurality of frequency domain resource sets includes: determining a candidate feedback resource configured in a first frequency domain resource set as the feedback resource, where the first frequency domain resource set is a frequency domain resource set that is predefined in the plurality of frequency domain resource sets and that is used to send the feedback information. Alternatively, the determining a feedback resource includes: determining the feedback resource in a first frequency domain resource set in the second slot, where the first frequency domain resource set is a frequency domain resource set that is predefined in the plurality of frequency domain resource sets and that is used to send the feedback information.

In a possible design, the determining a feedback resource from a plurality of candidate feedback resources corresponding to the plurality of frequency domain resource sets includes: determining a candidate feedback resource in an earliest slot in the plurality of candidate feedback resources as the feedback resource. Alternatively, the determining a feedback resource includes: determine the feedback resource in a first frequency domain resource set in the second slot, where a candidate feedback resource that can be used to send the feedback information is configured in each of the plurality of frequency domain resource sets, the first frequency domain resource set is a frequency domain resource set that is in the plurality of frequency domain resource sets and in which a configured candidate feedback resource is located in an earliest slot, and the second slot is a slot in which the candidate feedback resource configured in the first frequency domain resource set is located.

In the design, when slots in which candidate feedback resources that can be used to send the feedback information and that are configured in the plurality of frequency domain resource sets are located are not aligned, the candidate feedback resource in the earliest slot may be determined as the feedback resource. This helps reduce a delay of sending feedback information by a transmit end.

In a possible design, the method further includes: receiving SINR information from the first apparatus, where the SINR information includes an SINR of receiving the sidelink data by the first apparatus in each of the plurality of frequency domain resource sets; and the determining a feedback resource from a plurality of candidate feedback resources corresponding to the plurality of frequency domain resource sets includes: determining a candidate feedback resource in an earliest slot in at least one candidate feedback resource configured in at least one first frequency domain resource set as the feedback resource, where the at least one first frequency domain resource set is at least one frequency domain resource set with a largest SINR in the plurality of frequency domain resource sets. Alternatively, the method further includes: receiving signal to noise ratio SINR information from the first apparatus, where the SINR information includes an SINR of receiving the sidelink data by the first apparatus in each of the plurality of frequency domain resource sets; and the determining a feedback resource includes: determining the feedback resource in a first frequency domain resource set in the second slot, where a candidate feedback resource that can be used to send the feedback information is configured in each of the plurality of frequency domain resource sets, the first frequency domain resource set is a frequency domain resource set with a largest SINR that is in the plurality of frequency domain resource sets and in which a configured candidate feedback resource is located in an earliest slot, and the second slot is a slot in which the candidate feedback resource configured in the first frequency domain resource set is located.

In the design, starting from SINRs of the frequency domain resource sets and slots in which the feedback resources in the frequency domain resource sets are located, the candidate feedback resource in the earliest slot may be selected from the at least one candidate feedback resource configured in the at least one frequency domain resource set with the largest SINR, and is determined as the feedback resource, so that a success rate of receiving feedback information can be improved, thereby reducing a delay of sending the feedback information by a transmit end.

In a possible design, the method further includes: receiving CBR information from the first apparatus, where the CBR information includes a CBR of each of the plurality of frequency domain resource sets; and the determining a feedback resource from a plurality of candidate feedback resources corresponding to the plurality of frequency domain resource sets includes: determining a candidate feedback resource in an earliest slot in at least one candidate feedback resource configured in at least one first frequency domain resource set as the feedback resource, where the at least one first frequency domain resource set is at least one frequency domain resource set with a smallest CBR in the plurality of frequency domain resource sets. Alternatively, the method further includes: receiving CBR information from the first apparatus, where the CBR information includes a CBR of each of the plurality of frequency domain resource sets; and the determining a feedback resource includes: determining the feedback resource in a first frequency domain resource set in the second slot, where a candidate feedback resource that can be used to send the feedback information is configured in each of the plurality of frequency domain resource sets, the first frequency domain resource set is a frequency domain resource set with a smallest CBR that is in the plurality of frequency domain resource sets and in which a configured candidate feedback resource is located in an earliest slot, and the second slot is a slot in which the candidate feedback resource configured in the first frequency domain resource set is located.

In the design, starting from CBRs of the frequency domain resource sets and slots in which the feedback resources in the frequency domain resource sets are located, the candidate feedback resource in the earliest slot may be selected from the at least one candidate feedback resource configured in the at least one frequency domain resource set with the smallest CBR, and is determined as the feedback resource, so that a success rate of receiving feedback information can be improved, thereby reducing a delay of sending the feedback information by a transmit end.

According to a third aspect, an embodiment of this application provides a communication apparatus. The apparatus has a function of implementing the method in any one of the first aspect or the possible designs of the first aspect. The function may be implemented by hardware, or may be implemented by hardware executing corresponding software. The hardware or the software includes one or more modules (units) corresponding to the function, for example, includes an interface unit and a processing unit.

In a possible design, the apparatus may be a chip, a chip system, or a processing system. In this case, the interface unit may be an input/output interface of the chip system, and the processing unit may be a processor in the chip system, for example, a central processing unit (central processing unit, CPU).

In a possible design, the apparatus includes a memory and a processor. The memory is configured to store a program executed by the processor. When the program is executed by the processor, the apparatus may perform the method in any one of the first aspect or the possible designs of the first aspect.

In a possible design, the apparatus may be a terminal device or a network device, or may be a chip used in the terminal device or the network device, or another combined component or part that can implement a function of the terminal device or the network device. When the apparatus is the terminal device or the network device, the interface unit may be a transmitter and a receiver, or an integrated transceiver, and may include an antenna, a radio frequency circuit, and the like; and the processing unit may be a processor, for example, a baseband chip. When the apparatus is the part having the function of the terminal device or the network device, the interface unit may be a radio frequency unit, and the processing unit may be a processor.

According to a fourth aspect, an embodiment of this application provides a communication apparatus. The apparatus has a function of implementing the method in any one of the second aspect or the possible designs of the second aspect. The function may be implemented by hardware, or may be implemented by hardware executing corresponding software. The hardware or the software includes one or more modules (units) corresponding to the function, for example, includes an interface unit and a processing unit.

In a possible design, the apparatus may be a chip, a chip system, or a processing system. In this case, the interface unit may be an input/output interface of the chip system, and the processing unit may be a processor in the chip system, for example, a CPU.

In a possible design, the apparatus includes a memory and a processor. The memory is configured to store a program executed by the processor. When the program is executed by the processor, the apparatus may perform the method in any one of the second aspect or the possible designs of the second aspect.

In a possible design, the apparatus may be a terminal device or a network device, or may be a chip used in the terminal device or the network device, or another combined component or part that can implement a function of the terminal device or the network device. When the apparatus is the terminal device or the network device, the interface unit may be a transmitter and a receiver, or an integrated transceiver, and may include an antenna, a radio frequency circuit, and the like; and the processing unit may be a processor, for example, a baseband chip. When the apparatus is the part having the function of the terminal device or the network device, the interface unit may be a radio frequency unit, and the processing unit may be a processor.

According to a fifth aspect, an embodiment of this application provides a communication system. The communication system includes a first apparatus that can perform the method in any one of the first aspect or the possible designs of the first aspect and a second apparatus that can perform the method in any one of the second aspect or the possible designs of the second aspect.

According to a sixth aspect, an embodiment of this application provides a computer-readable storage medium. The storage medium stores a computer program or instructions. When the computer program or the instructions are executed, the method in any one of the first aspect or the possible designs of the first aspect or the method in any one of the second aspect or the possible designs of the second aspect may be implemented.

According to a seventh aspect, an embodiment of this application further provides a computer program product, including a computer program or instructions. When the computer program or the instructions are executed, the method in any one of the first aspect or the possible designs of the first aspect or the method in any one of the second aspect or the possible designs of the second aspect may be implemented.

According to an eighth aspect, an embodiment of this application further provides a chip. The chip is coupled to a memory, and is configured to read and execute a program or instructions stored in the memory, to implement the method in any one of the first aspect or the possible designs of the first aspect or the method in any one of the second aspect or the possible designs of the second aspect.

For technical effects that can be achieved by any possible design in any one of the third aspect to the eighth aspect, refer to the technical effects that can be achieved by a corresponding design in the first aspect or the second aspect. Details are not described herein again.

**BRIEF DESCRIPTION OF DRAWINGS**

FIG. 1 is a diagram of an architecture of a V2X communication system according to an embodiment of this application;
FIG. 2 is a diagram of a V2X mode 1 according to an embodiment of this application;
FIG. 3 is a diagram of a V2X mode 2 according to an embodiment of this application;
FIG. 4 is a diagram of indicating subframes available for V2X communication by using a bitmap according to an embodiment of this application;
FIG. 5 is a diagram of a frequency domain resource in a V2X communication resource pool according to an embodiment of this application;
FIG. 6 is a diagram of PSFCH feedback resources in V2X communication resource pools according to an embodiment of this application;
FIG. 7 is a diagram of a bitmap indicating PSFCH feedback resources according to an embodiment of this application;
FIG. 8 is a diagram of time domain resources of PSFCHs corresponding to PSSCHs according to an embodiment of this application;
FIG. 9 is a diagram of PSFCH feedback resource allocation according to an embodiment of this application;
FIG. 10 is a diagram of a carrier aggregation scenario according to an embodiment of this application;
FIG. 11 is a diagram 1 of a V2X scenario according to an embodiment of this application;
FIG. 12 is a diagram 2 of a V2X scenario according to an embodiment of this application;
FIG. 13 is a diagram 3 of a V2X scenario according to an embodiment of this application;
FIG. 14 is a diagram of a communication method according to an embodiment of this application;
FIG. 15 is a diagram of indicating available subframes of a plurality of carriers for V2X communication by using a bitmap according to an embodiment of this application;
FIG. 16 is a diagram 1 of a V2X communication resource pool configuration in a carrier aggregation scenario according to an embodiment of this application;
FIG. 17 is a diagram 2 of a V2X communication resource pool configuration in a carrier aggregation scenario according to an embodiment of this application;
FIG. 18 is a diagram 1 of a communication apparatus according to an embodiment of this application; and
FIG. 19 is a diagram 2 of a communication apparatus according to an embodiment of this application.

**DESCRIPTION OF EMBODIMENTS**

The technical solutions in embodiments of this application may be applied to various communication systems, for example, a D2D communication system, a vehicle to everything (vehicle to everything, V2X) communication system, a long term evolution (long term evolution, LTE) system, a Wi-Fi system, a 5th generation (5th Generation, 5G) system such as an NR system, and a future communication system such as a 6G system.

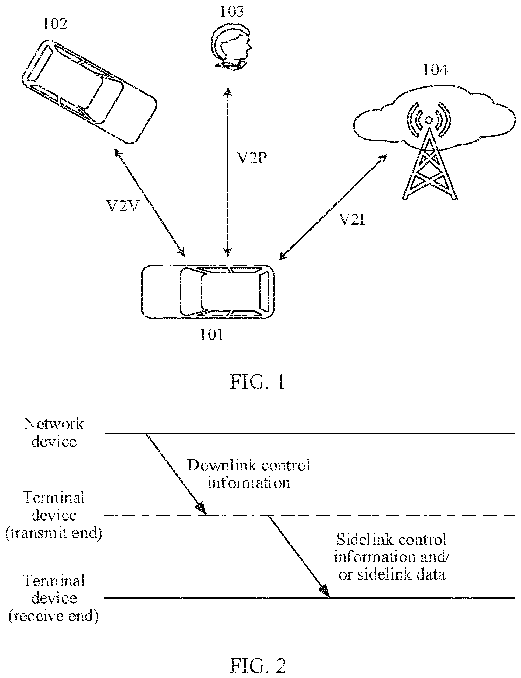

V2X communication is a special case of D2D communication, and is communication between a vehicle and any object outside. The V2X communication includes vehicle to vehicle (vehicle to vehicle, V2V) communication, vehicle to pedestrian (vehicle to pedestrian, V2P) communication, vehicle to infrastructure (vehicle to infrastructure, V2I) communication, and the like. The V2I communication may include vehicle to network (vehicle to network, V2N) communication. For example, the technical solutions in embodiments of this application are applied to the V2X communication system. FIG. 1 is a diagram of an architecture of a V2X communication system according to an embodiment of this application. The communication system includes a vehicle 101, a vehicle 102, a pedestrian 103, and a network device 104. V2V is communication between vehicles, for example, communication between the vehicle 101 and the vehicle 102. V2P is communication between a vehicle and a pedestrian (including a pedestrian, a person riding a bicycle, a driver, a passenger, or the like), for example, communication between the vehicle 101 and the pedestrian 103. V2I is communication between a vehicle and an infrastructure, for example, communication between the vehicle 101 and the network device 104.

For ease of understanding by a person skilled in the art, the following explains and describes some terms in embodiments of this application.

(1) Terminal device: The terminal device includes a device that provides a voice and/or data connectivity for a user. Specifically, the terminal device includes a device that provides the voice for the user, includes a device that provides the data connectivity for the user, or includes a device that provides the voice and the data connectivity for the user. For example, a hand-held device with a wireless connection function or a processing device connected to a wireless modem may be included. The terminal device may communicate with a core network via a radio access network (radio access network, RAN), and exchange a voice or data with the RAN, or exchange the voice and the data with the RAN. The terminal device may include user equipment (user equipment, UE), a wireless terminal device, a mobile terminal device, a D2D terminal device, a V2X terminal device, a machine-to-machine/machine-type communication (machine-to-machine/machine-type communication, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (or referred to as a "cellular" phone), a computer having a mobile terminal device, or a portable, pocket-sized, hand-held, or a computer-embedded mobile apparatus. For example, the terminal device may be a device, such as a personal communication service (personal communication service, PCS) phone, a cordless telephone, a session initiation protocol (session initiation protocol, SIP) phone, a wireless local loop (wireless local loop, WLL) station, or a personal digital assistant (personal digital assistant, PDA). The terminal device may alternatively include a limited device, for example, a device with low power consumption, a device with a limited storage capability, or a device with a limited computing capability. For example, the terminal device includes an information sensing device such as a barcode, radio frequency identification (radio frequency identification, RFID), a sensor, a global positioning system (global positioning system, GPS), or a laser scanner.

A terminal device in a V2X technology may be a road side unit (road side unit, RSU), and the RSU may be a fixed infrastructure entity that supports a V2X application, and may exchange a message with another entity that supports the V2X application. For example, the road side unit may exchange a message with the another entity that supports the V2X application through a PC5 interface.

The terminal device in the V2X technology may alternatively be an entire vehicle, a communication module (for example, a communication chip or a chip system) in the entire vehicle, a remote information processor (telematics BOX, TBOX), or the like.

By way of example, and not limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, for example, smart watches or smart glasses, and include devices that dedicated to only one type of application function and need to collaboratively work with other devices such as smartphones, for example, various smart bands, smart helmets, or smart jewelry for monitoring physical signs.

If the various terminal devices described above are located in a vehicle (for example, placed in the vehicle or mounted in the vehicle), the terminal devices may be all considered as vehicle-mounted terminal devices. For example, the vehicle-mounted terminal devices are also referred to as on-board units (on-board units, OBUs).

In embodiments of this application, the terminal device may further include a relay (relay). Alternatively, it may be understood that any device that can perform data communication with a base station may be considered as a terminal device.

In embodiments of this application, an apparatus configured to implement a function of the terminal device may be a terminal device, or may be an apparatus, for example, a part or a component having a communication function, or a chip system, used in the terminal device to support the terminal device in implementing the function, and the apparatus may be mounted in the terminal device. In embodiments of this application, the chip system may be formed by a chip, or may include the chip and another discrete component. In the technical solutions provided in embodiments of this application, an example in which the apparatus configured to implement the function of the terminal is the terminal device is used to describe the technical solutions provided in embodiments of this application.

(2) Network device: The network device includes, for example, an access network (access network, AN) device such as a base station (for example, an access point), and may be a device that communicates with a wireless terminal device over an air interface through one or more cells in an access network. Alternatively, for example, a network device in a V2X technology is a base station-type RSU. The base station may be configured to perform conversion between a received over-the-air frame and an internet protocol (internet protocol, IP) packet, and serve as a router between the terminal device and other parts of the access network, where the other parts of the access network may include an IP network. The base station-type RSU may be a fixed infrastructure entity that supports a V2X application, and may exchange a message with another entity that supports the V2X application. For example, the base station-type road side unit may exchange, through a Uu interface, a message with the another entity that supports the V2X application. The network device may further coordinate attribute management of the air interface. For example, the network device may include an evolved NodeB (NodeB, eNB, or e-NodeB, evolved NodeB) in an LTE system or a long term evolution-advanced (long term evolution-advanced, LTE-A) system, or may include a next generation NodeB (next generation NodeB, gNB) in an NR system, or may include a central unit (central unit, CU) and/or a distributed unit (distributed unit, DU) in a cloud access network (cloud radio access network, Cloud RAN) system. This is not limited in embodiments of this application. For example, the network device may be a CU in the Cloud RAN system, a DU, or an integration of the CU and the DU.

The network device may further include a core network device, and the core network device includes, for example, an access and mobility management function (access and mobility management function, AMF). Because embodiments of this application mainly relate to the access network, unless otherwise specified in the following, the network device is the access network device.

In embodiments of this application, an apparatus configured to implement a function of the network device may be a network device, or may be an apparatus, for example, a chip system, that can support the network device in implementing the function. The apparatus may be mounted in the network device. In the technical solutions provided in embodiments of this application, an example in which the apparatus configured to implement the function of the network device is the network device is used to describe the technical solutions provided in embodiments of this application.

(3) V2X transmission mode: V2X communication mainly has two transmission modes: a mode based on network device scheduling, namely, a mode 1, and a mode in which a user autonomously selects a resource, namely, a mode 2.

The mode 1 is used for V2X communication within a coverage area of a network device. The network device centrally allocates time-frequency resources (including a time domain resource and a frequency domain resource) based on a buffer status report (buffer status report, BSR) status of terminal devices. As shown in FIG. 2, a network device indicates, through downlink control information (downlink control information, DCI), a time-frequency resource used by a transmit end terminal device to send sidelink data. After receiving the DCI, the transmit end terminal device sends sidelink control information (sidelink control information, SCI) and/or the sidelink data to a receive end terminal device on the time-frequency resource indicated by the DCI. In the mode 1, time-frequency resources used by terminal devices to send sidelink data are uniformly scheduled by the network device, so that a collision between the time-frequency resources used by different terminal devices to send the sidelink data can be avoided.

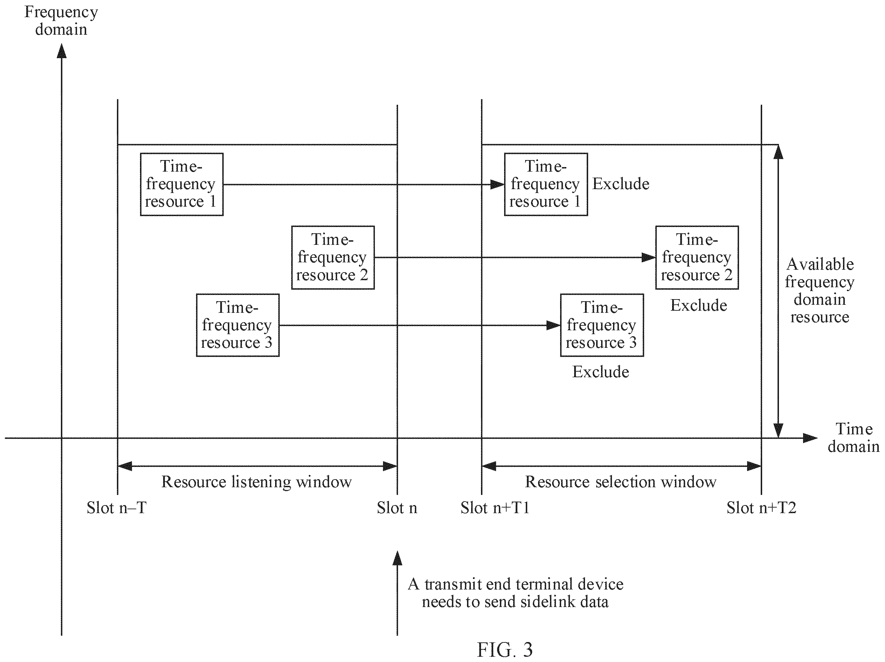

In the mode 2, a time-frequency resource used by a transmit end terminal device to send sidelink data is selected by the transmit end terminal device based on a listening result of the transmit end terminal device, and does not depend on network device scheduling. The mode is not limited by network coverage. In a case without the network coverage, the transmit end terminal device may also use the mode for communication. If the transmit end terminal device needs to send sidelink data to the receive end terminal device in a slot n, and resource selection is triggered, a resource listening window may be defined as T slots before the resource selection is triggered, and a resource selection window is a slot corresponding to [n+T1, n+T2] after the resource selection is triggered. As shown in FIG. 3, if a transmit end terminal device needs to send sidelink data to a receive end terminal device in a slot n, and resource selection is triggered, a resource listening and selection procedure of the transmit end terminal device may be as follows. 1. The transmit end terminal device listens, in a slot corresponding to a resource listening window [n-T, n], to SCI sent by another terminal device in a frequency domain resource pool. 2. If the sensed SCI includes a time-frequency resource reserved by the another terminal device, and the reserved time-frequency resource is located in a resource selection window [n+T1, n+T2], a sending terminal device performs physical sidelink shared channel (physical sidelink shared channel, PSSCH) reference signal received power (reference signal received Power, RSRP) measurement on a candidate time-frequency resource corresponding to the reserved time-frequency resource. If a measurement result is greater than a preset RSRP threshold ThRSRP, the candidate time-frequency resource is excluded from the resource selection window. The preset RSPR threshold ThRSRP may be determined based on a priority corresponding to data indicated in the received SCI and a function of a priority corresponding to the to-be-sent sidelink data of the sending terminal device. 3. The sending terminal device selects, from a set of remaining candidate time-frequency resources, a time-frequency resource for sending the sidelink data.

As shown in FIG. 3, the transmit end terminal device detects, on a time-frequency resource 1, a time-frequency resource 2, and a time-frequency resource 3, the SCI sent by the another terminal device, and PSSCH-RSRP of the SCI exceeds the threshold ThRSRP. Therefore, the transmit end terminal device excludes these time-frequency resources from the resource selection window, in other words, the transmit end terminal device selects the time-frequency resource from a time-frequency resource other than the time-frequency resource 1, the time-frequency resource 2, and the time-frequency resource 3 in the resource selection window to send the sidelink data. The transmit end terminal device selects, based on the listening result, the time-frequency resource for sending the sidelink data, and sends sidelink control and/or the sidelink data to the receive end terminal device on the selected time-frequency resource. In the mode 2, terminal devices separately perform resource listening and selection. Therefore, a collision between time-frequency resources for sending sidelink control and/or sidelink data may occur.

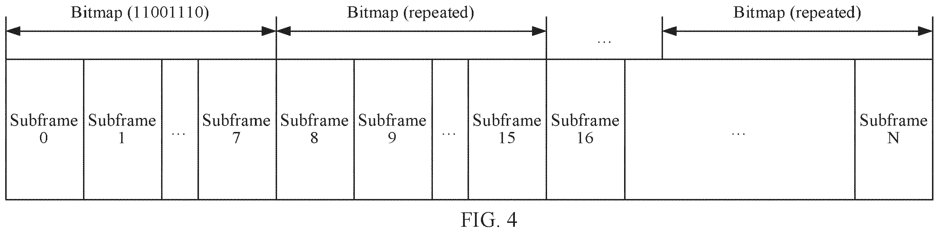

(4) V2X communication resource pool: The V2X communication resource pool may also be referred to as a V2X communication resource pool, a resource pool, or the like. A time-frequency resource for V2X communication is configured based on the V2V communication resource pool. The V2V communication resource pool may be considered as a set of time domain resources (which may also be referred to as time resources) and frequency domain resources (which may also be referred to as frequency resources) used for V2V communication. For the time domain resource, a network device uses a bitmap and periodically repeats the bitmap, to indicate a set of subframes available for the V2V communication in all subframes in a communication system. As shown in FIG. 4, a bitmap with a length of 8 bits is provided as a bitmap example. In the bitmap, 1 represents a subframe available for V2X communication, and 0 represents a normal subframe, namely, a subframe unavailable for the V2X communication. When the bitmap is 11001110, in a subframe 0 to a subframe 7, the subframe 0, the subframe 1, the subframe 4, the subframe 5, and the subframe 6 are subframes available for the V2X communication, in a subframe 8 to a subframe 15, the subframe 8, the subframe 9, the subframe 12, the subframe 13, and the subframe 14 are subframes available for the V2X communication, and so on. A quantity of symbols occupied for sidelink (sidelink, SL) transmission in each subframe available for the V2X communication is fixed at M symbols, and M may be defined as an SL time domain transmission duration or a time domain transmission unit. It should be understood that, unless otherwise specified, all symbols in embodiments of this application are time domain symbols, and the time domain symbol may be an orthogonal frequency division multiplexing (orthogonal frequency division multiplexing, OFDM) symbol, or may be a discrete Fourier transform-spread-OFDM (Discrete Fourier Transform-spread-OFDM, DFT-s-OFDM) symbol.

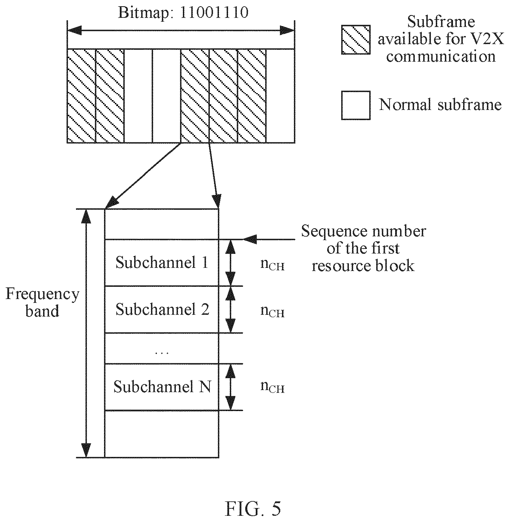

For the frequency domain resource in the V2V communication resource pool, the network device may divide a frequency band used for the V2V communication into several subchannels, and each subchannel includes a specific quantity of resource blocks (resource blocks, RBs). FIG. 5 is a diagram of a frequency domain resource in a communication resource pool. A network device indicates a sequence number of the first resource block of a frequency domain resource used for V2V communication, a total quantity N of subchannels included in the communication resource pool, and a quantity $n_{CH}$ of resource blocks included in each subchannel, to determine the frequency domain resource. One or more subchannels may be occupied in a time of V2V transmission. When a V2X communication resource is scheduled, scheduling is performed at a granularity of a subchannel in frequency domain. In addition, it should be noted that, unless otherwise specified in embodiments of this application, an RB and a physical resource block (physical resource block, PRB) are the same, and may be interchanged, for example, both refer to 12 contiguous carriers in frequency domain.

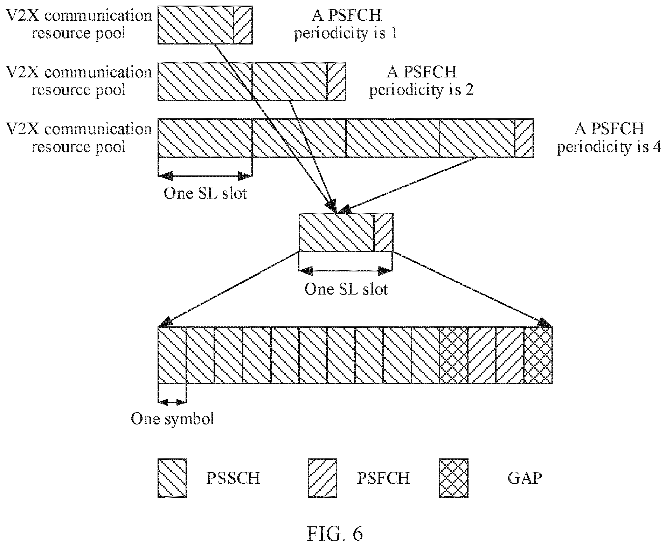

In an NR system, V2X communication supports a physical layer hybrid automatic repeat request (hybrid automatic repeat request, HARQ)-acknowledgment (ACK) feedback, where the HARQ-ACK feedback may also be referred to as a HARQ feedback. To be specific, for a time of physical sidelink shared channel (physical sidelink shared channel, PSSCH) sending, if a transmit end terminal device includes HARQ-ACK feedback enabling (which may also be referred to as HARQ feedback enabling) information in control information, a receive end terminal device needs to feed back, based on a PSSCH decoding result of this time, responsive ACK/negative acknowledgment (NACK) information, where the ACK/NACK information is transmitted through a physical sidelink feedback channel (physical sidelink feedback channel, PSFCH). A PSFCH feedback resource (time-frequency resource) is a periodic resource configured in the V2X communication resource pool and a periodicity configuration parameter $N_{PSSCH}^{PSFCH}$ of the PSFCH feedback resource may be 0, 1, 2, or 4. $N_{PSSCH}^{PSFCH} = 0$ represents that there is no PSFCH feedback resource configuration in the V2X communication resource pool, and PSFCH sending is not enabled in the V2X communication resource pool, in other words, the physical layer HARQ feedback is not supported. $N_{PSSCH}^{PSFCH} = 1,2,4$ represents that there is a PSFCH feedback slot in every $N_{PSSCH}^{PSFCH}$ SL slots in a time window. As shown in FIG. 6, when $N_{PSSCH}^{PSFCH} = 1,2,4$, there is a PSFCH feedback slot in every one, two, or four SL slots, and in a slot in which a PSFCH feedback resource is located, a PSFCH occupies last two symbols of a gap (GAP).

It can be learned from FIG. 6 that, if there is a PSFCH feedback resource configuration in a V2X communication resource pool, a PSFCH feedback resource is configured once in every $N_{PSSCH}^{PSFCH}$ slots. It is different from network device scheduling that, in a V2X transmission mode 2 scenario, a user needs to autonomously select, based on a listening result of the user, a time-frequency resource for sending a PSSCH. Therefore, to simplify a PSFCH feedback resource selection process, a PSFCH feedback resource is configured for each PSSCH subchannel in V2X communication. A specific process of determining the PSFCH feedback resource corresponding to each subchannel is as follows.

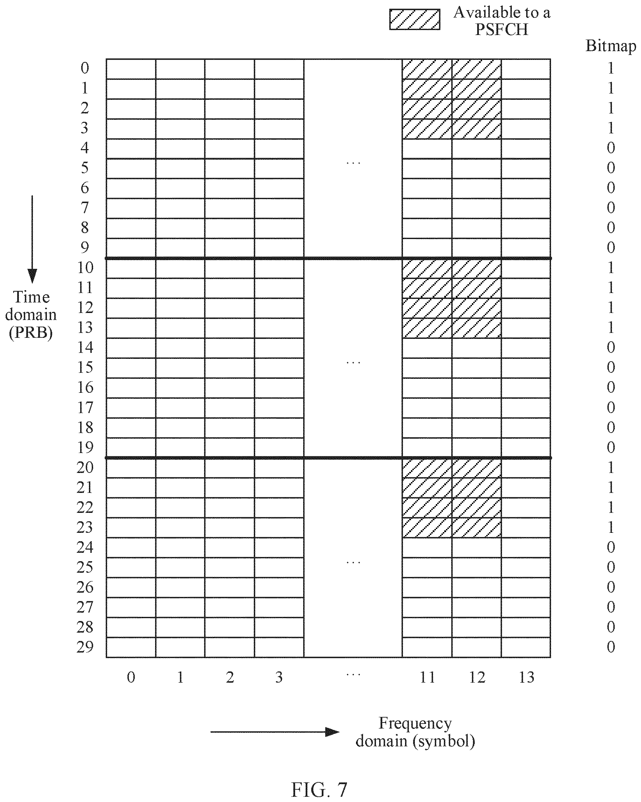

1. A bitmap (bitmap) of a PSFCH frequency domain resource is configured in a V2X communication resource pool, to indicate whether a specific PRB on a frequency domain resource in which the V2X communication resource pool is located can be used as a PSFCH feedback resource. To be specific, a length of bit information included in the bitmap is equal to a quantity of PRBs in the V2X communication resource pool. 1 in the bitmap represents that a corresponding PRB can be used as the PSFCH feedback resource, and a bit 0 represents that a corresponding PRB resource cannot be used as the PSFCH feedback resource. As shown in FIG. 7, in a slot having PSFCH feedback resources, assuming that one subchannel includes 10 PRBs, and a V2X communication resource pool includes three subchannels in total, a bitmap indicating a PSFCH frequency domain resource in the V2X communication resource pool includes 3*10=30 bits in total, to respectively indicate whether each PRB can be used as the PSFCH feedback resource. As shown in FIG. 7, the bitmap indicates that first four PRBs of each subchannel can be used as PSFCH feedback resources.

2. Because every $N_{PSSCH}^{PSFCH}$ PSSCH slots correspond to a PSFCH feedback slot, for a V2X communication resource pool including $N_{subch}$ subchannels, a quantity of PSFCH feedback resources corresponding to each subchannel is

$$M_{subch,\ slot}^{PSFCH} = M_{PRB,\ set}^{PSFCH} / \left( N_{subch} \cdot N_{PSSCH}^{PSFCH} \right)$$

, where $M_{PRB,\ set}^{PSFCH}$ represents a quantiy of PRBs of the PSFCH frequency domain resource, in other words, indicates a total quantity of bits whose value is 1 and that are in the bitmap of the PSFCH frequency domain resource, and $N_{PSSCH}^{PSFCH}$ is a periodicity configuration parameter of the PSFCH feedback resource.

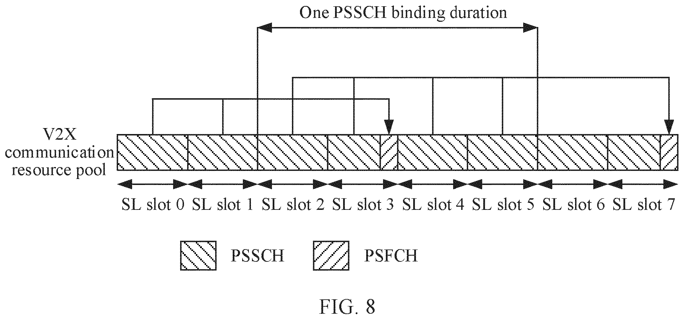

3. Out of the consideration for a limitation of a decoding capability of the receive end, the receive end cannot immediately perform feedback after receiving a PSSCH. Therefore, a PSSCH feedback time interval K is defined in a standard. To be specific, the PSSCH transmits a PSFCH in the first available slot including a PSFCH feedback resource. There are at least K slots between the slot and a slot in which the PSSCH is located, and a value of K is configured in the V2X communication resource pool. As shown in FIG. 8, when $N_{PSSCH}^{PSFCH} = 4$, and K=2, a PSFCH feedback resource in an SL slot 3 may perform feedback on PSSCHs carried in an SL slot 0 and an SL slot 1, and a PSFCH feedback resource in which an SL slot 7 is located performs feedback on PSSCHs carried in an SL slot 2, an SL slot 3, an SL slot 4, and an SL slot 5. In addition, because that the PSFCH feedback resource in the one SL slot performs feedback on the SL slot 2, the SL slot 3, the SL slot 4, and the SL slot 5, the SL slot 2, the SL slot 3, the SL slot 4, and the SL slot 5 may be referred to as one PSSCH binding window length.

Feedback resources available to a PSFCH in a PSFCH feedback slot are sequentially allocated to each subchannel in a feedback periodicity first in ascending order of time domain and then in ascending order of frequency domain.

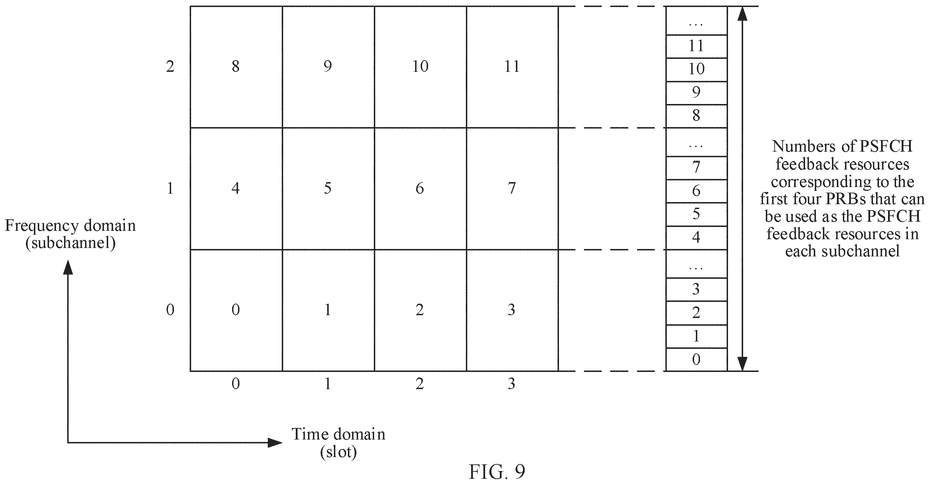

Specifically, as shown in FIG. 9, when $N_{PSSCH}^{PSFCH} = 4$, a V2X communication resource pool has three subchannels in total, and first four PRBs of each subchannel may be used as PSFCH feedback resources, numbers of PSFCH feedback resources corresponding to each subchannel in four bound PSSCH slots (namely, SL slots) are shown in FIG. 9. To be specific, a PSFCH feedback resource with one PRB is allocated to each subchannel in each slot, the first four PRBs of all of the three subchannels are numbered from 0 to 15 once in ascending order of frequency domain, and the numbers correspond to a PSFCH feedback resource 0 to a PSFCH feedback resource 15. Specifically, a number of a PSFCH feedback resource corresponding to a subchannel 0 in a slot 0 in the four bound PSSCH slots is 0, a number of a PSFCH feedback resource corresponding to a subchannel 0 in a slot 1 is 1, a number of a PSFCH feedback resource corresponding to a subchannel 0 in a slot 2 is 2, a number of a PSFCH feedback resource corresponding to a subchannel 0 in a slot 3 is 3, ..., a number of a PSFCH feedback resource corresponding to a subchannel 2 in a slot 0 is 8, a number of a PSFCH feedback resource corresponding to a subchannel 2 in a slot 1 is 9, a number of a PSFCH feedback resource corresponding to a subchannel 2 in a slot 2 is 10, and a number of a PSFCH feedback resource corresponding to a subchannel 2 in a slot 3 is 11. In terms of formula representation, for the $i^{th}$ slot in N bound PSSCH slots, if a number of a frequency domain subchannel in the $i^{th}$ slot in a V2X communication resource pool is j, a PSFCH resource corresponding to the frequency domain subchannel is:

$$\left[\left(i + j \cdot N_{PSSCH}^{PSFCH}\right) \cdot M_{subch,\ slot}^{PSFCH}, \left(i + 1 + j \cdot N_{PSSCH}^{PSFCH}\right) \cdot M_{subch,\ slot}^{PSFCH} - 1\right]$$

. If a user occupies two subchannels for transmission, for example, occupies the subchannel 1 and the subchannel 2 in the slot 1 for transmission, PSFCH feedback resources corresponding to the subchannels are 5 and 9 respectively, and are non-contiguous in frequency domain.

(5) PSFCH feedback manner: NR-V2X supports three scenarios: unicast, multicast, and broadcast. A physical layer HARQ-ACK feedback is supported for the unicast and the multicast. There are two multicast scenarios: a multicast scenario 1 and a multicast scenario 2.

In a unicast scenario, a transmit end and a receive end form a unicast connection pair. After correctly receiving a PSSCH from the transmit end, if the receive end can correctly decode a PSCCH corresponding to the PSSCH, the receive end feeds back enabling indication information based on a HARQ-ACK of the PSCCH. If the PSSCH is correctly decoded, the receive end feeds back a PSFCH sequence that carries ACK information to the transmit end; otherwise, the receive end feeds back a PSFCH sequence that carries NACK information.

In a multicast scenario, a transmit end and one or more receive ends in a group form a plurality of connection pairs. In the multicast 1 (NACK-only) scenario, if the receive end in the group can correctly decode a PSCCH corresponding to a PSSCH, the receive end feeds back enabling indication information based on a HARQ-ACK of the PSCCH. If decoding of the PSSCH fails, the receive end feeds back a PSFCH sequence that carries NACK information; otherwise, the receive end does not feed back any information.

In the multicast 2 (NACK/ACK) scenario, if the receive end in the group can correctly decode a PSCCH corresponding to a PSSCH, the receive end feeds back enabling indication information based on a HARQ-ACK of the PSCCH. If decoding of the PSSCH fails, the receive end feeds back a PSFCH sequence that carries NACK information; otherwise, the receive end feeds back a PSFCH sequence that carries NACK information.

PSFCH sequence generation

A PSFCH sequence is a ZC sequence based on a low peak-to-average ratio, and occupies two contiguous OFDM symbols in time domain and one PRB in frequency domain. A specific generation manner is: generating a basic sequence r(n), $0 \le n < M_{ZC}$ based on a sequence length, performing phase rotation on the basic sequence r(n), and generating a PSFCH sequence $r^{\alpha}(n)$ that has a low peak-to-average ratio and that can be multiplexed in the following manner:

$$r^{\alpha}(n) = r * e^{j\alpha n}, 0 \le n < M_{ZC}.$$

$M_{ZC} = 12$, j represents an imaginary part parameter, and $\alpha$ is a phase rotation value. Generating distinguishable PSFCH sequences by using different $\alpha$ is supported, and PSFCH sequences are code-division multiplexed on a PRB for transmission. Because a terminal device needs to feed back ACK information and NACK information, in other words, at least two sequences are allocated to a user, and the sequences respectively correspond to different values of $\alpha$. The phase rotation value $\alpha$ is determined by using the following formula:

$$\alpha_l = \frac{2\pi}{N_{sc}^{RB}} \left(\left(m_0 + m_{cs} + n_{cs}(n_{s,f}^{\mu}, l + l')\right) \bmod N_{sc}^{RB}\right)$$

.

$N_{sc}^{RB}$ represents a quantity of subcarriers in a PRB, and in an NR system, a value is defined as 12, $a_l$ represents $\alpha$, $n_{s,f}^{\mu}$ represents a slot number (slot number) corresponding to a current subcarrier spacing $\mu$ in a radio frame, $l$ represents a number of an OFDM symbol in a PSFCH transmission slot, $l = 0$ represents the first OFDM symbol of a current PSFCH transmission resource, $l'$ represents a symbol index of the current PSFCH transmission resource relative to the first OFDM symbol, $m_0$ represents a phase of an ACK sequence in a PSFCH feedback resource pair, and $m_{cs}$ represents a phase offset of a NACK sequence relative to the ACK sequence in the PSFCH feedback resource pair.

In the NR system, V2X supports a physical layer PSFCH feedback in the unicast scenario and the multicast scenario. For different service types, values of $m_{cs}$ may be determined based on Table 1 and Table 2.

**Table 1**

| HARQ value (HARQ value) | 0 | 1 |
|---|---|---|
| Sequence cyclic shift (sequence cyclic shift) | $m_{CS}=0$ | $m_{CS}=6$ |

Table 1 shows a sequence cyclic shift of a PSFCH feedback sequence pair in the unicast scenario and the multicast 2 scenario, namely, a phase mapping relationship of PSFCH feedback sequences. A HARQ value of 0 may represent a decoding failure, and a HARQ value of 1 may represent a decoding success.

**Table 2**

| HARQ value (HARQ value) | 0 | 1 |
|---|---|---|
| Sequence cyclic shift (sequence cyclic shift) | $m_{CS}=0$ | N/A |

Table 2 shows a mapping relationship of HARQ information of a physical uplink control channel (physical uplink control channel, PUCCH) format 0 (format 0) having a scheduling request (scheduling request, SR) in the multicast 1 scenario. A HARQ value of 0 may represent a decoding failure.

A function $n_{cs}(n_c,l)$ is represented as:

$$n_{cs}\left(n_{s,f}^{\mu}, l\right) = \sum_{m=0}^{7} 2^m c\left(8N_{symb}^{slot} n_{s,f}^{\mu} + 8l + m\right).$$

c(i) represents a value of a sequence number i in a pseudo-random sequence, and a generation process is shown in the following paragraphs. $N_{symb}^{slot}$ represents a quantity of contiguous time domain symbols in a slot, and a value is 14. An initial value of a generated pseudo-random sequence is $c_{init} = n_{ID}$ , where $n_{ID}$ may be configured by a higher layer, and is 0 if the higher layer does not perform configuration.

A pseudo-random sequence $c(n)$ whose length is $M_{PN}$ is generated by performing cyclic shift on a gold sequence whose length is 31, where $n = 0, 1,...,M_{PN}$ -1. The gold sequence is two m sequences: x1(n) and x2(n). A generation process is as follows:

$$c(n) = \left(x_1\left(n + N_C\right) + x_2\left(n + N_C\right)\right) \bmod 2$$

$$x_1(n+31) = \left(x_1(n+3) + x_1(n)\right) \bmod 2$$

$$x_2(n+31) = \left(x_2(n+3) + x_2(n+2) + x_2(n+1) + x_2(n)\right) \bmod 2 .$$

$N_C$ = 1600, $x_1(0)$ = 1, $x_1(n)$ = 0, $n$ =1, 2,..., 30 , and $x_2(n)$ is determined by using $c_{init} = \sum_{i=0}^{30} x_2(i) \cdot 2^i$ .

With reference to the foregoing V2X communication resource pool, it can be learned that, if a PSSCH occupies $N_{subch}^{PSSCH}$ subchannels, the PSSCH corresponds to $N_{CS}^{PSFCH}$ PSFCH feedback resource pairs, where the PSFCH feedback resource pair is a PSFCH sequence pair, $N_{CS}^{PSFCH}$ represents a quantity of PSFCH sequence pairs that can be multiplexed on a PSFCH feedback resource with one PRB configured in the V2X communication resource pool, and $M_{subch, slot}^{PSFCH}$ represents a quantity of PRBs in a PSFCH feedback resource allocated to each subchannel.

In addition, for the V2X communication resource pool, $N_{type}^{PSFCH}$ may be further configured, to limit a PSFCH feedback resource that can be used by a receive end of a PSSCH. There are two solutions below:

If $N_{type}^{PSFCH} = 1$ is configured for the V2X communication resource pool, the receive end of the PSSCH can use only a PSFCH feedback resource corresponding to the first subchannel of the PSSCH, that is, $R_{PRB, CS}^{PSFCH} = M_{subch, slot}^{PSFCH} \cdot N_{CS}^{PSFCH}$. As shown in FIG. 9, when a PSSCH occupies a subchannel 1 and a subchannel 2 of a slot 1 to send sidelink data, a receive end of the PSSCH can perform feedback by using only a PSFCH feedback resource numbered 5.

If the V2X communication resource pool is configured with $N_{type}^{PSFCH} = N_{subch}^{PSSCH}$, the receive end of the PSSCH may perform feedback by using PSFCH feedback resources corresponding to all subchannels of the PSSCH, that is, $R_{PRB, CS}^{PSFCH} = N_{subch}^{PSSCH} \cdot M_{subch, slot}^{PSFCH} \cdot N_{CS}^{PSFCH}$. As shown in FIG. 9, when a PSSCH occupies a subchannel 1 and a subchannel 2 of a slot 1 to send sidelink data, a receive end of the PSSCH can perform feedback by using PSFCH feedback resources numbered 5 and 9.

(6) Carrier aggregation (carrier aggregation, CA): To meet requirements for increasing a peak rate of a single user and a system capacity, the most direct method is to increase a system transmission bandwidth. However, spectrum resources for wireless communication are scarce resources, especially contiguous spectrums with a large bandwidth. Therefore, the carrier aggregation is introduced in a communication system as a solution. In the carrier aggregation, two or more component carriers (component carriers, CCs) are aggregated to support a larger transmission bandwidth (a maximum of 100 MHz). To efficiently utilize a fragmented spectrum, the CA supports aggregation of different CCs. (1) Intra-band contiguous carrier aggregation: A plurality of CCs belong to a same frequency band and are contiguous in frequency domain. (2) Intra-band non-contiguous carrier aggregation: A plurality of CCs belong to a same frequency band but are non-contiguous in frequency domain. (3) Inter-band carrier aggregation: CCs belong to different frequency bands (where the plurality of CCs are basically non-contiguous in frequency domain because the CCs belong to the different frequency bands).

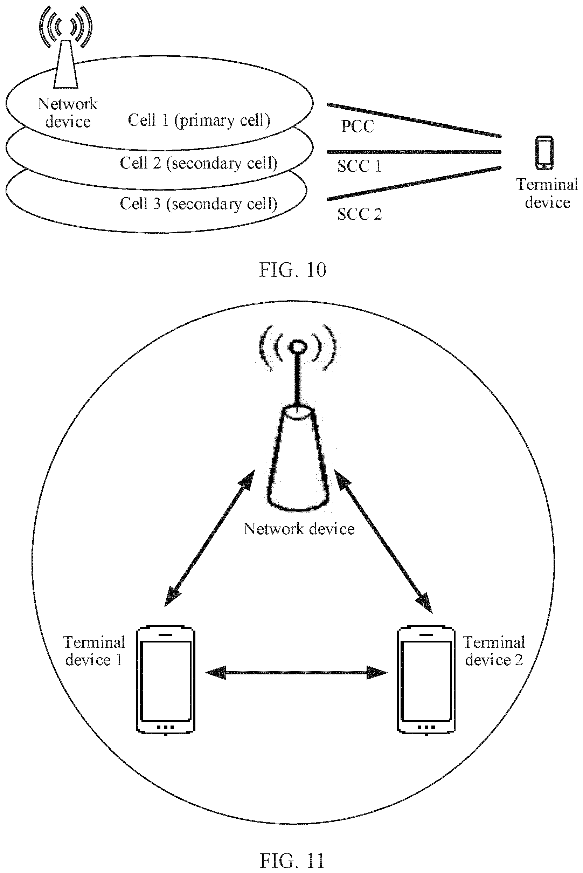

FIG. 10 is a diagram of a CA scenario. Carrier aggregation may be carrier aggregation of different cells. One carrier is referred to as a primary carrier (primary carrier, PCC), and a cell corresponding to the PCC is referred to as a primary cell (PCell). The other two carriers are referred to as secondary carriers (secondary carriers, SCCs), and a cell corresponding to the SCC is referred to as a secondary cell (SCell). In addition, carrier aggregation may alternatively be aggregation of different carriers in a same cell.

The foregoing mainly describes some noun concepts in embodiments of this application. The following describes the technical features in embodiments of this application.

To cope with an increasing amount of sidelink data between devices, a CA technology may be introduced in sidelink communication, for example, a communication scenario such as D2D or V2X, to send and receive sidelink data on a plurality of carriers. Therefore, how to send and receive feedback information in a multicarrier scenario is a problem worth considering.

Based on this, embodiments of this application provide a communication method and apparatus, to send and receive the feedback information in the multicarrier scenario, so as to improve feedback efficiency and resource utilization. The method and the apparatus are based on a same inventive concept. Because the method and the apparatus have a similar problem-resolving principle, for implementations of the apparatus and the method, refer to each other, and a repeated part is not described again.

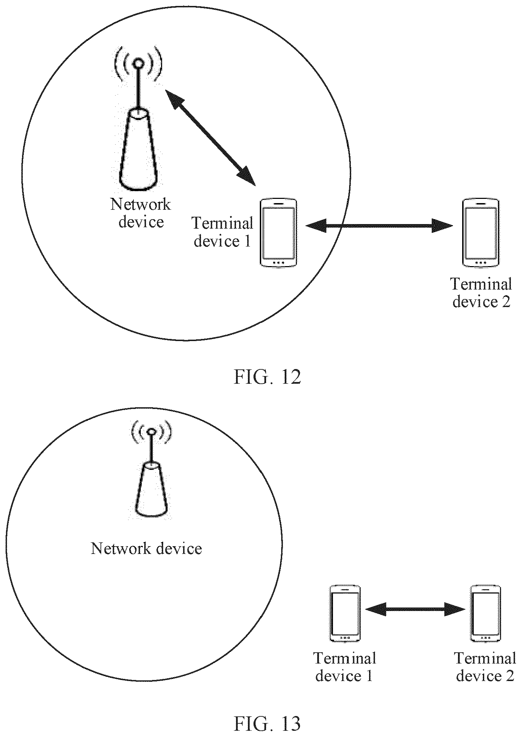

Embodiments provided in this application are applicable to a plurality of different scenarios, for example, applicable to a mode based on network device scheduling and a mode in which a user autonomously selects a resource that are in a communication scenario with or without network coverage. FIG. 11 to FIG. 13 are diagrams of several V2X scenarios to which embodiments of this application are applicable. FIG. 11 to FIG. 13 include a network device and two terminal devices: a terminal device 1 and a terminal device 2. Both the two terminal devices may be located within a coverage area of the network device, as shown in FIG. 11. Alternatively, only the terminal device 1 may be located within a coverage area of the network device, and the terminal device 2 is not located within the coverage area of the network device, as shown in FIG. 12. Alternatively, neither of the two terminal devices is located within a coverage area of the network device, as shown in FIG. 13. The two terminal devices may communicate with each other through a sidelink (sidelink, SL). Certainly, a quantity of terminal devices in FIG. 11 to FIG. 13 is merely an example. During actual application, the network device may serve a plurality of terminal devices.

The following describes in detail embodiments of this application with reference to the accompanying drawings. In embodiments of this application, a first apparatus may be the terminal device 1 in FIG. 11 to FIG. 13, and a second apparatus may be the terminal device 2 in FIG. 11 to FIG. 13. The terminal device 2 is a transmit end of sidelink data, and the terminal device 1 is a receive end of the sidelink data. Certainly, the first apparatus may alternatively be a receive end device of sidelink data in V2X communication, D2D communication, or the like, or a component or a part that has a function of the receive end device, or a chip (for example, a processor, a baseband chip, or a chip system) used in the receive end device. The second apparatus may alternatively be a transmit end device of the sidelink data in the V2X communication, the D2D communication, or the like, or a component or a part that has a function of the transmit end device, or a chip (for example, a processor, a baseband chip, or a chip system) used in the transmit end device. This is not limited in this application. In addition, in embodiments of this application, different apparatuses (or devices) may communicate with each other by using a licensed spectrum, or may communicate with each other by using an unlicensed spectrum, or may communicate with each other by using both the licensed spectrum and the unlicensed spectrum. The different apparatuses (or devices) may communicate with each other by using a spectrum below 6 gigahertz (gigahertz, GHz), or may communicate with each other by using a spectrum above 6 GHz, or may communicate with each other by using both the spectrum below 6 GHz and the spectrum above 6 GHz. A spectrum resource used for wireless communication is not limited in embodiments of this application.

The following describes in detail embodiments of this application with reference to the accompanying drawings.

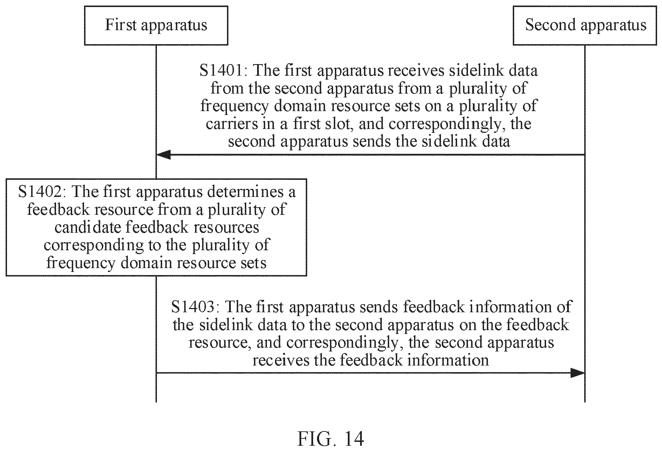

FIG. 14 is a diagram of a communication method according to an embodiment of this application. The method includes the following steps.

S1401: A first apparatus receives sidelink data from a second apparatus from a plurality of frequency domain resource sets on a plurality of carriers in a first slot, and correspondingly, the second apparatus sends the sidelink data to the first apparatus in the plurality of frequency domain resource sets on the plurality of carriers in the first slot.

Each of the plurality of carriers includes at least one frequency domain resource set.

As a throughput requirement of V2X communication increases sharply, a currently available frequency band bandwidth of the V2X communication cannot meet a capacity requirement of the V2X communication. However, spectrum resources for wireless communication are scarce resources, especially contiguous spectrums with a large bandwidth. Therefore, carrier aggregation may be introduced as a solution. Two or more CCs are aggregated to support a larger bandwidth. The two or more aggregated CCs may be a plurality of contiguous carriers in one frequency band, or may be a plurality of non-contiguous carriers in one frequency band, or may be a plurality of carriers belonging to different frequency bands.

In embodiments of this application, the frequency domain resource set may be a segment of contiguous frequency resources. For example, in the V2X communication, a V2X communication resource pool on each carrier is independent, and there may be one or more V2X communication resource pools on a carrier. A time-frequency resource (a time domain resource and a frequency domain resource) is configured in each V2X communication resource pool, and the frequency domain resource in each V2X communication resource pool may be referred to as a frequency domain resource set. For a process of configuring, by a network device, the time-frequency resource in each V2X communication resource pool, refer to the descriptions of the foregoing V2X communication resource pool. Details are not described again.

S1402: The first apparatus determines a feedback resource from a plurality of candidate feedback resources corresponding to the plurality of frequency domain resource sets, where a candidate feedback resource is configured in each of the plurality of frequency domain resource sets, the feedback resource belongs to one of the plurality of frequency domain resource sets in frequency domain, and the feedback resource is located in a second slot in time domain.

For example, the step S1402 may also be described as follows: The first apparatus determines a feedback resource, where the feedback resource belongs to one of a plurality of frequency domain resource sets in frequency domain, and the feedback resource is located in a second slot in time domain.

It should be understood that, when the frequency domain resource set is a frequency domain resource in a V2X communication resource pool, the candidate feedback resource configured in the frequency domain resource set is a feedback resource in the V2X communication resource pool or a feedback resource configured in the V2X communication resource pool.

S1403: The first apparatus sends feedback information of the sidelink data to the second apparatus on the feedback resource, and correspondingly, the second apparatus receives the feedback information.

Optionally, before receiving the feedback information from the first apparatus, the second apparatus may also determine, in a manner the same as or similar to that of the first apparatus, the feedback resource from the plurality of candidate feedback resources corresponding to the plurality of frequency domain resource sets, and receive the feedback information on the determined feedback resource. Alternatively, the second apparatus may directly detect the plurality of candidate feedback resources corresponding to the plurality of frequency domain resource sets, to receive the feedback information on the feedback resource used by the first apparatus to send the feedback information.

It should be understood that sending the sidelink data in the V2X communication may also be referred to as sending a PSSCH, namely, sending data carried on the PSSCH; sending the feedback information of the sidelink data may also be referred to as sending a PSFCH, namely, sending data carried on the PSFCH; and the feedback resource may also be referred to as a PSFCH feedback resource.

In some implementations, to enable the second apparatus to simultaneously send the sidelink data in the plurality of frequency domain resource sets on the plurality of carriers, and the first apparatus to simultaneously receive the sidelink data in the plurality of frequency domain resource sets on the plurality of carriers, subframes (namely, SL subframes) of a plurality of V2X communication resource pools on the plurality of carriers may be aligned.

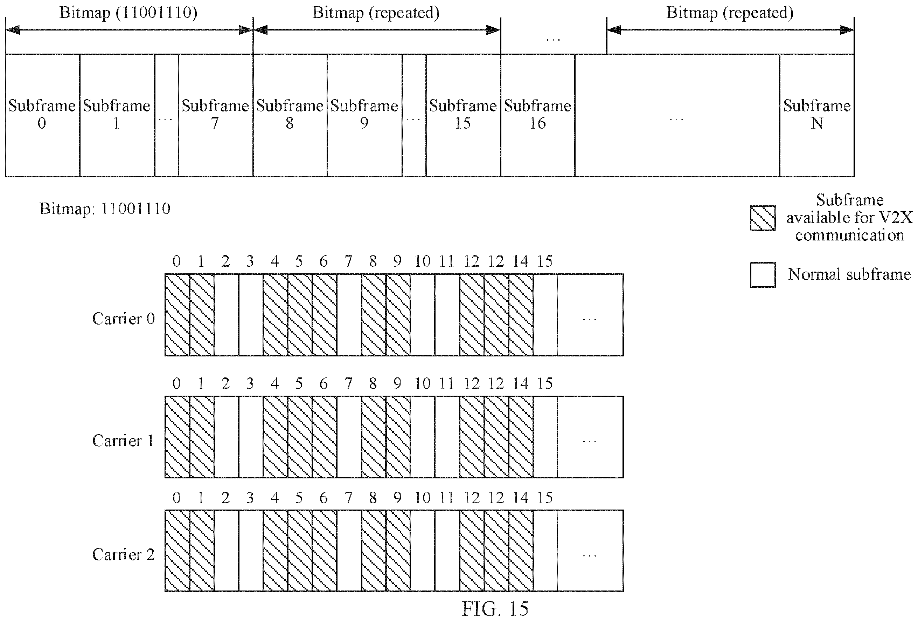

For example, a total of three carriers are aggregated, which are a carrier 0, a carrier 1, and a carrier 2, each carrier includes one V2X communication resource pool, and a subcarrier spacing is 15 kHz. Time domain resources in V2X communication resources on the carrier 0, the carrier 1, and the carrier 2 all may be indicated by using a unified bitmap "11001110". When the subcarrier spacing is 15 kHz, a length of each slot is 1 ms, and each subframe includes one slot. As shown in FIG. 15, a bitmap "11001110" may indicate that time domain resources in V2X communication resource pools on a carrier 0, a carrier 1, and a carrier 2 include a subframe 0, a subframe 1, a subframe 4, a subframe 5, and a subframe 6 in the subframe 0 to a subframe 7, a subframe 8, a subframe 9, a subframe 12, a subframe 13, and a subframe 14 in the subframe 8 to a subframe 15, and so on. In other words, SL slots included in the time domain resources in the V2X communication resource pools on the carrier 0, the carrier 1, and the carrier 2 are: a slot 0, a slot 1, a slot 4, a slot 5, and a slot 6 in the slot 0 to a slot 7, a slot 8, a slot 9, a slot 12, a slot 13, and a slot 14 in the slot 8 to a slot 15, and so on.

For example, that the second apparatus sends the sidelink data to the first apparatus in the plurality of frequency domain resource sets on the plurality of carriers in S1401 may include: The second apparatus simultaneously sends, based on network device scheduling, the sidelink data to the first apparatus on frequency domain resources scheduled by the network device in the plurality of frequency domain resource sets of the plurality of V2X communication resource pools on the plurality of carriers in an SL slot (namely, a first slot) of the network device scheduling.

In addition, the second apparatus may alternatively autonomously determine, in a mode in which a user autonomously selects a resource, a time domain resource and a frequency domain resource for sending the sidelink data in each V2X communication resource pool, and time domain resources for sending the sidelink data in the V2X communication resource pools are the same. The second apparatus simultaneously sends, based on the time domain resource and the frequency domain resource for sending the sidelink data in each V2X communication resource pool, the sidelink data to the first apparatus on the determined frequency domain resources in the plurality of frequency domain resource sets of the plurality of V2X resource pools on the plurality of carriers in a determined SL slot (namely, a first slot).

For that the second apparatus sends the sidelink data to the first apparatus in the plurality of frequency domain resource sets on the plurality of carriers, in a possible implementation, the second apparatus may jointly encode the sidelink data sent in the plurality of frequency domain resource sets on the plurality of carriers. In other words, the second apparatus sends one piece of sidelink data in the plurality of frequency domain resource sets of the plurality of V2X communication resource pools, and sends only a part of the sidelink data in a frequency domain resource set of each of the plurality of V2X communication resource pools. The first apparatus needs to jointly decode the sidelink data received from the plurality of frequency domain resource sets of the plurality of V2X communication resource pools, and when a HARQ-ACK feedback is enabled, for the sidelink data received from the plurality of frequency domain resource sets of the plurality of V2X communication resource pools, the first apparatus may jointly feed back, based on a decoding result, at least one PSFCH sequence that carries ACK information or PSFCH sequence that carries NACK information.

In another possible implementation, the second apparatus may alternatively separately encode the sidelink data sent in the plurality of frequency domain resource sets on the plurality of carriers. In other words, the second apparatus sends a plurality of pieces of sidelink data in the plurality of frequency domain resource sets of the plurality of V2X communication resource pools, and the first apparatus needs to separately decode the sidelink data received from the plurality of frequency domain resource sets of the plurality of V2X communication resource pools, and when a HARQ-ACK feedback is enabled, for the sidelink data received from the plurality of frequency domain resource sets of the plurality of V2X communication resource pools, the first apparatus may respectively feed back, based on a decoding result, PSFCH sequences carrying ACK information or PSFCH sequences carrying NACK information.

With reference to the introduction part of the foregoing PSFCH feedback manner, it can be learned that, different phase rotation values $\alpha$ may be used to generate distinguishable PSFCH sequences, and each PSFCH sequence may be code-division multiplexed on a PRB for sending. Different $m_{cs}$ may be used to generate different $\alpha$, so that different PSFCH sequences are generated. Optional values of $m_{cs}$ are 0 to 11, six PSFCH sequence pairs may be generated in total, and the six PSFCH sequence pairs may respectively correspond to values of $m_{cs}$: 0 and 6, 1 and 7, 2 and 8, 3 and 9, 4 and 10, and 5 and 11.

When the HARQ-ACK feedback is enabled, in a unicast scenario or a multicast 2 scenario, for receiving of each piece of sidelink data, the first apparatus needs to feed back a PSFCH sequence that carries ACK information or PSFCH sequence that carries NACK information, and a pair of PSFCH sequences is required, for example, a PSFCH sequence pair whose values of corresponding $m_{cs}$ are 0 and 6, and a PSFCH sequence pair whose values of corresponding $m_{cs}$ are 1 and 7. In a multicast 1 scenario, for receiving of each piece of sidelink data, the first apparatus only needs to feed back, after decoding of the sidelink data fails, a PSFCH sequence that carries NACK information, and the PSFCH sequence that carries the NACK information and that is in a pair of PSFCH sequences is required, for example, a PSFCH sequence whose value of $m_{cs}$ is 0 in a PSFCH sequence pair whose values of corresponding $m_{cs}$ are 0 and 6, and a PSFCH sequence whose value of $m_{cs}$ is 1 in a PSFCH sequence pair whose values of corresponding $m_{cs}$ are 1 and 7.

It can be learned from the foregoing content that, for sidelink data received in a frequency domain resource set of one V2X communication resource pool, the first apparatus needs to feed back, on a candidate feedback resource configured in the frequency domain resource set, only one PSFCH sequence that carries ACK information or PSFCH sequence that carries NACK information, and only one pair of PSFCH sequences is occupied. When a minimum candidate feedback resource includes one PRB, five remaining pairs of PSFCH sequences are still available, and may be code-division multiplexed on the PRB for sending.

However, for a case in which the second apparatus jointly encodes the sidelink data sent to the first apparatus in the plurality of frequency domain resource sets of the plurality of V2X communication resource pools, the first apparatus needs to jointly decode the sidelink data received from the plurality of frequency domain resource sets of the plurality of V2X communication resource pools. If the first apparatus respectively sends feedback information of the sidelink data to the second apparatus on candidate feedback resources configured in the plurality of frequency domain resource sets, in other words, respectively sends, to the second apparatus on feedback resources in the plurality of V2X communication resource pools, the PSFCH sequence that carries the ACK information or the NACK information and that is generated based on the decoding result of the sidelink data, content of the plurality of pieces of feedback information sent by the first apparatus to the second apparatus is the same.

For a case in which the second apparatus separately encodes the sidelink data sent to the first apparatus in the plurality of frequency domain resource sets of the plurality of V2X communication resource pools, the first apparatus needs to separately decode the sidelink data received from the plurality of frequency domain resource sets of the plurality of V2X communication resource pools. If the first apparatus respectively sends, to the second apparatus on candidate feedback resources configured in the plurality of frequency domain resource sets, feedback information of the sidelink data received in the corresponding frequency domain resource sets, only one pair of PSFCH sequences is applied to each candidate feedback resource. When a minimum candidate feedback resource includes one PRB, five remaining pairs of PSFCH sequences are still available in each candidate feedback resource.

Considering that the feedback information is respectively sent on the candidate feedback resources (namely, the feedback resources in the plurality of V2X communication resource pools) in the plurality of frequency domain resource sets of the plurality of V2X communication resource pools, non-contiguous feedback sequences in frequency domain cause additional power back-off, and especially for cross-carrier sending, additional power back-off needs to be performed. In this way, maximum transmit power available to an apparatus decreases, and signal receiving reliability is affected. In addition, large overheads of signaling, a processing resource of a device, and the like are caused. In embodiments of this application, the first apparatus may determine only one feedback resource from a plurality of candidate feedback resources corresponding to a plurality of frequency domain resource sets, and send feedback information of sidelink data to the second apparatus.

In an example, for the case in which the second apparatus jointly encodes the sidelink data sent to the first apparatus in the plurality of frequency domain resource sets of the plurality of V2X communication resource pools, the first apparatus needs to jointly decode the sidelink data received from the plurality of frequency domain resource sets. The first apparatus may determine only one feedback resource in the plurality of candidate feedback resources corresponding to the plurality of frequency domain resource sets, to send the feedback information of the sidelink data, so as to avoid repeated sending of the feedback information.

For the case in which the second apparatus separately encodes the sidelink data sent to the first apparatus in the plurality of frequency domain resource sets of the plurality of V2X communication resource pools, the first apparatus needs to separately decode the sidelink data received from the plurality of frequency domain resource sets. The first apparatus may aggregate the feedback information of the sidelink data received in the plurality of frequency domain resource sets on one candidate feedback resource for sending. In other words, a plurality of pairs of PSFCH sequences may be applied to a candidate feedback resource configured in one frequency domain resource set, to feed back the decoding result of the sidelink data received in the plurality of frequency domain resource sets.

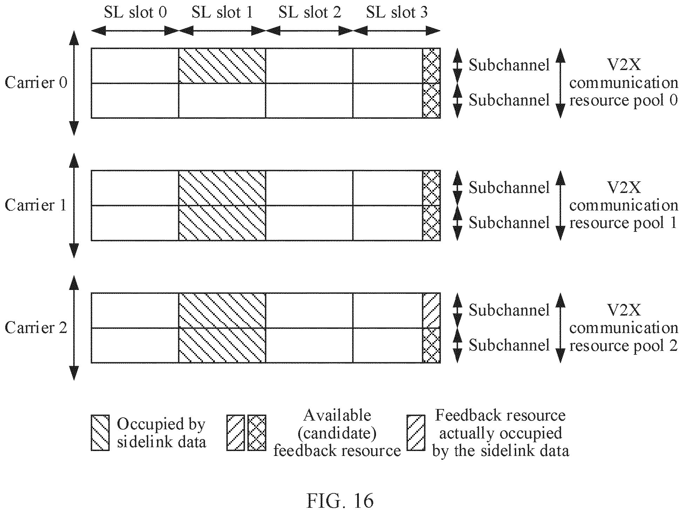

In an example, as shown in FIG. 16, a total of three carriers are aggregated, which are a carrier 0, a carrier 1, and a carrier 2, and each carrier includes one V2X communication resource pool: a V2X communication resource pool 0, a V2X communication resource pool 1, and a V2X communication resource pool 2. A second apparatus simultaneously sends sidelink data to a first apparatus on frequency domain resources scheduled by a network device in frequency domain resource sets of the V2X communication resource pool 1, the V2X communication resource pool 2, and the V2X communication resource pool 3 in a first slot (for example, an SL slot 1), and the sidelink data is separately encoded. The first apparatus correctly decodes the sidelink data received in the frequency domain resource sets of the V2X communication resource pool 0, the V2X communication resource pool 1, and the V2X communication resource pool 2, and the second apparatus may send, to the first apparatus on a feedback resource (located in the frequency domain resource set of the V2X communication resource pool 2 and a second slot, for example, an SL slot 3) configured in the frequency domain resource set of the V2X communication resource pool 2, a PSFCH sequence whose value of $m_{cs}$ is 6 in a PSFCH sequence pair whose values of corresponding $m_{cs}$ are 0 and 6, a PSFCH sequence whose value $m_{cs}$ of is 7 in a PSFCH sequence pair whose values of corresponding $m_{cs}$ are 1 and 7, and a PSFCH sequence whose value of $m_{cs}$ is 8 in a PSFCH sequence pair whose values of corresponding $m_{cs}$ are 2 and 8, where feedback information of the V2X communication resource pool 0 corresponds to PSFCH sequences whose values of $m_{cs}$ are 0 and 6, feedback information of the V2X communication resource pool 1 corresponds to PSFCH sequences whose values of $m_{cs}$ are 1 and 7, and feedback information of the V2X communication resource pool 2 corresponds to PSFCH sequences whose values of $m_{cs}$ are 2 and 8.

A candidate feedback resource configured in the frequency domain resource set of the V2X communication resource pool is a feedback resource corresponding to the sidelink data in the V2X communication resource pool in which the frequency domain resource set is located. For determining of the feedback resource corresponding to the sidelink data in the V2X communication resource pool, refer to the descriptions of the foregoing V2X communication resource pool part, and a repeated part is not described again.

It should be understood that, the foregoing example is described by using an example in which the feedback information of the V2X communication resource pool 0 corresponds to the PSFCH sequence pair whose values of $m_{cs}$ are 0 and 6, the feedback information of the V2X communication resource pool 1 corresponds to the PSFCH sequences whose values of $m_{cs}$ are 1 and 7, the feedback information of the V2X communication resource pool 2 corresponds to the PSFCH sequences whose values of $m_{cs}$ are 2 and 8, PSFCH sequences whose values of $m_{cs}$ are 6, 7, and 8 carry ACK information representing that decoding succeeds, and PSFCH sequences whose values of $m_{cs}$ are 0, 1, and 2 carry NACK information representing that decoding of the sidelink data fails. During actual application, a correspondence between feedback information of a V2X communication resource pool and a PSFCH sequence pair, and a specific sequence that carries NACK information or ACK information and that is in the PSFCH sequence pair may be determined in manners such as protocol pre-definition, pre-broadcasting of a network device, and negotiation between the first apparatus and the second apparatus. This is not limited in this application.

For a plurality of candidate feedback resources configured in a plurality of frequency domain resource sets of a plurality of V2X communication resource pools, the first apparatus may randomly select, from the plurality of candidate feedback resources, one candidate feedback resource as a feedback resource for sending feedback information. In some implementations, the first apparatus may alternatively determine, from perspectives of signal to noise ratios (signal to interference plus noise ratios, SINRs) of receiving sidelink data in the plurality of frequency domain resource sets, channel busy ratios (channel busy ratios, CBRs) of the plurality of frequency domain resource sets, and the like, a first frequency domain resource set (or a first V2X resource pool) in which a feedback resource for sending feedback information is located, to determine the feedback resource for sending the feedback information.

With reference to specific examples, the following describes possible manners in which the first apparatus determines the feedback resource from the plurality of candidate feedback resources corresponding to the plurality of frequency domain resource sets.

Manner 1: A first apparatus determines a candidate feedback resource configured in a first frequency domain resource set as a feedback resource, where the first frequency domain resource set is a frequency domain resource set with a largest SINR of receiving sidelink data in a plurality of frequency domain resource sets.

Manner 1 may also be described as follows: A first apparatus determines a feedback resource in a first frequency domain resource set in a second slot, where the first frequency domain resource set is a frequency domain resource set with a largest SINR of receiving sidelink data in a plurality of frequency domain resource sets.

A larger SINR of receiving the sidelink data by the first apparatus in the frequency domain resource sets indicates better channel quality and higher accuracy of the sidelink data transmission. Therefore, in some embodiments, the first apparatus may select, from the plurality of frequency domain resource sets, the frequency domain resource set with the largest SINR of receiving the sidelink data as the first frequency domain resource set in which the feedback resource is located, and use a candidate feedback resource configured in the frequency domain resource set with the largest SINR as the feedback resource, in other words, use a candidate feedback resource configured in a V2X communication resource pool in which the frequency domain resource set with the largest SINR is located as the feedback resource.

The SINR is obtained by the first apparatus through measurement based on a pilot of a received signal in the frequency domain resource set, and the received signal is the sidelink data sent by a second apparatus to the first apparatus in the plurality of frequency domain resource sets on a plurality of carriers in a first slot. Alternatively, the SINR is an average SINR in a specific time period, for example, a network layer (L3) SINR obtained by using an alpha filtering method.

Manner 2: A first apparatus determines a candidate feedback resource configured in a first frequency domain resource set as a feedback resource, where the first frequency domain resource set is a frequency domain resource set with a smallest CBR in a plurality of frequency domain resource sets.

Manner 2 may also be described as follows: A first apparatus determines a feedback resource in a first frequency domain resource set in a second slot, where the first frequency domain resource set is a frequency domain resource set with a smallest CBR in a plurality of frequency domain resource sets.

A smaller CBR of the frequency domain resource set indicates smaller load of the frequency domain resource set and higher accuracy of sidelink data transmission. Therefore, in some embodiments, the first apparatus may select, from the plurality of frequency domain resource sets, the frequency domain resource set with the smallest CBR as the first frequency domain resource set in which the feedback resource is located, and use a candidate feedback resource configured in the frequency domain resource set with a smallest CBD as the feedback resource, in other words, use a candidate feedback resource configured in a V2X communication resource pool in which the frequency domain resource set with the smallest CBD is located as the feedback resource.

In an example, a total of three carriers are aggregated, which are a carrier 0, a carrier 1, and a carrier 2, and each carrier includes one V2X communication resource pool: a V2X communication resource pool 0, a V2X communication resource pool 1, and a V2X communication resource pool 2. Frequency domain resource sets corresponding to the V2X communication resource pool 0, the V2X communication resource pool 1, and the V2X communication resource pool 2 are respectively a frequency domain resource set 0, a frequency domain resource set 1, and a frequency domain resource set 2. A CBR of the frequency domain resource set 0 is the largest, a CBR of the frequency domain resource set 1 is the second largest, and a CBR of the frequency domain resource set 2 is the smallest. In this case, it is determined that the frequency domain resource set 2 is the first frequency domain resource set in which the feedback resource is located, and it may be determined that a candidate feedback resource configured in the frequency domain resource set 2 is the feedback resource used by the first apparatus to send feedback information.

The CBR of the frequency domain resource set may be understood as a channel busy ratio measured by the first apparatus on a frequency domain resource set. A CBR at a moment N (for example, in a slot n) represents a proportion that is determined by the first apparatus in the slot n based on received channel strength indicator (received signal strength indicator, RSSI) results of subchannels in all slots from a slot n-a to a slot n-1 that are measured in a previous time window [n-a, n-1] and that is of a subchannel RSSI that exceeds a threshold. The threshold is configured by a network device, and a parameter a that determines a lower limit of the time window may be 100, in a unit of slot. The RSSI represents a linear average value of received signals in a slot.

Manner 3: A first apparatus receives indication information from a network device, where the indication information indicates a first frequency domain resource set, and the first frequency domain resource set is one of a plurality of frequency domain resource sets; and the first apparatus determines a candidate feedback resource configured in the first frequency domain resource set as a feedback resource.

Manner 3 may also be described as follows: A first apparatus receives indication information from a network device, where the indication information indicates a first frequency domain resource set, and the first frequency domain resource set is one of a plurality of frequency domain resource sets; and the first apparatus determines a feedback resource in the first frequency domain resource set in a second slot.

The network device may configure the frequency domain resource set in which the feedback resource is located for the first apparatus based on CBRs of the frequency domain resource sets, a probability of collision between feedback resources of a plurality of apparatuses (or devices), a frequency of the feedback resource, and the like. Therefore, in some embodiments, the first apparatus may select, from the plurality of frequency domain resource sets, a frequency domain resource set indicated by the network device as the first frequency domain resource set in which the feedback resource is located, and determine a candidate feedback resource configured in the first frequency domain resource set indicated by the network device as the feedback resource.

Manner 4: A first apparatus determines a candidate feedback resource configured in a first frequency domain resource set as a feedback resource, where the first frequency domain resource set is a frequency domain resource set that is predefined in a plurality of frequency domain resource sets and that is used to send feedback information.

Manner 4 may also be described as follows: A first apparatus determines a feedback resource in a first frequency domain resource set in a second slot, where the first frequency domain resource set is a frequency domain resource set that is predefined in a plurality of frequency domain resource sets and that is used to send feedback information.

In an example, a protocol may predefine that a frequency domain resource set located on a primary carrier is the frequency domain resource set used to send the feedback information, a total of three carriers are aggregated, which are a carrier 0, a carrier 1, and a carrier 2, and each carrier includes one V2X communication resource pool: a V2X communication resource pool 0, a V2X communication resource pool 1, and a V2X communication resource pool 2. Frequency domain resource sets corresponding to the V2X communication resource pool 0, the V2X communication resource pool 1, and the V2X communication resource pool 2 are respectively a frequency domain resource set 0, a frequency domain resource set 1, and a frequency domain resource set 2. The carrier 0 is a primary carrier configured by a network device. The first apparatus may determine the frequency domain resource set 0 as the first frequency domain resource set in which the feedback resource is located, and may further determine a candidate feedback resource configured in the frequency domain resource set 0 as the feedback resource, in other words, a candidate feedback resource configured in the V2X communication resource pool 0 is the feedback resource.

In addition, when radio frequency channels of the plurality of carriers are not shared, configuration periodicities of PSFCHs in the V2X communication resource pools on the plurality of carriers may be different. In other words, time domain locations in which PSFCH slots that can be used to send feedback information in the V2X communication resource pools on all carriers are located may be different.

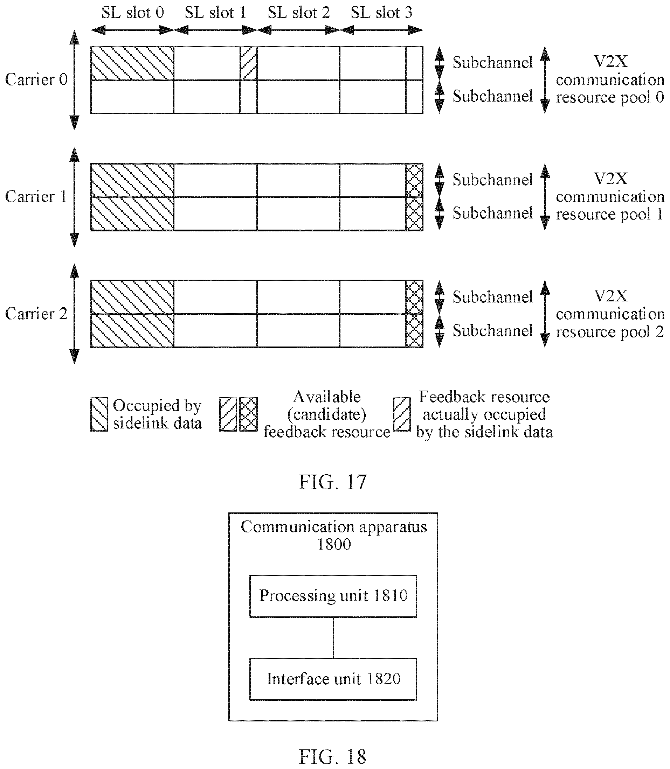

As shown in FIG. 17, when a configuration periodicity of a PSFCH in a V2X communication resource pool 0 of a carrier 0 is two slots, configuration periodicities of PSFCHs in V2X communication resource pools on a carrier 1 and a carrier 2 are four slots, and a time interval K of a PSSCH feedback is 1, when sidelink data is sent in a first slot (an SL slot 0) in a frequency domain resource set of the V2X communication resource pool, a slot in which a candidate feedback resource (namely, an available feedback resource) is located in the frequency domain resource set of the V2X communication resource pool 0 is an SL slot 1, slots in which candidate feedback resources are located in the frequency domain resource sets of the V2X communication resource pool 1 and the V2X communication resource pool 2 are an SL slot 3. For a case in which the time domain locations in which the PSFCH slots that can be used to send the feedback information in the V2X communication resource pools (namely, frequency domain resource sets of the V2X communication resource pools) on all the carriers are located are different, in embodiments of this application, the feedback resource may be determined from the plurality of candidate feedback resources corresponding to the plurality of frequency domain resource sets from a perspective of a delay and a sending success rate.

Manner 5: A first apparatus determines a candidate feedback resource in an earliest slot in a plurality of candidate feedback resources as a feedback resource.

Manner 5 may also be described as follows: A first apparatus determines a feedback resource in a first frequency domain resource set in a second slot, where a candidate feedback resource that can be used to send feedback information is configured in each of a plurality of frequency domain resource sets, the first frequency domain resource set is a frequency domain resource set that is in the plurality of frequency domain resource sets and in which a configured candidate feedback resource is located in an earliest slot, and the second slot is a slot in which the candidate feedback resource configured in the first frequency domain resource set is located.

In an example, as shown in FIG. 17, a total of three carriers are aggregated, which are a carrier 0, a carrier 1, and a carrier 2, and each carrier includes one V2X communication resource pool: a V2X communication resource pool 0, a V2X communication resource pool 1, and a V2X communication resource pool 2. Frequency domain resource sets (namely, frequency domain resource sets) corresponding to the V2X communication resource pool 0, the V2X communication resource pool 1, and the V2X communication resource pool 2 are respectively a frequency domain resource set 0, a frequency domain resource set 1, and a frequency domain resource set 2. When a configuration periodicity of a PSFCH in the V2X communication resource pool 0 is two slots, configuration periodicities of PSFCHs in the V2X communication resource pool 1 and the V2X communication resource pool 2 are four slots, and feedback time intervals K of the PSSCHs in the V2X communication resource pool 0, the V2X communication resource pool 1, and the V2X communication resource pool 2 are all one slot, when sidelink data is sent in the frequency domain resource set of the V2X communication resource pool in a first slot (an SL slot 0), a slot in which a candidate feedback resource is located in the frequency domain resource set 0 of the V2X communication resource pool 0 is an SL slot 1, slots in which candidate feedback resources are located in the frequency domain resource set 1 and the frequency domain resource set 2 of the V2X communication resource pool 1 and the V2X communication resource pool 2 are an SL slot 3, and the SL slot 1 is earlier than the SL slot 3. The first apparatus may determine the candidate feedback resource in the frequency domain resource set 0 as a feedback resource, and a second slot in which the feedback resource is located is the SL slot 1.

Manner 6: A first apparatus determines a candidate feedback resource in an earliest slot in at least one candidate feedback resource configured in at least one first frequency domain resource set as a feedback resource, where the at least one first frequency domain resource set is at least one frequency domain resource set with a largest SINR of receiving sidelink data in a plurality of frequency domain resource sets.

Manner 6 may also be described as follows: A first apparatus determines a feedback resource in a first frequency domain resource set in a second slot, where a candidate feedback resource that can be used to send feedback information is configured in each of a plurality of frequency domain resource sets, the first frequency domain resource set is a frequency domain resource set with a largest SINR of receiving sidelink data that is in the plurality of frequency domain resource sets and in which a configured candidate feedback resource is located in an earliest slot, and the second slot is a slot in which the candidate feedback resource configured in the first frequency domain resource set is located.

In manner 6, the first apparatus may select, from the at least one candidate feedback resource configured in the at least one frequency domain resource set with the largest SINR, the candidate feedback resource in the earliest slot, and determine the candidate feedback resource as the feedback resource, so that a success rate of sending feedback information can be improved, thereby reducing a delay of sending the feedback information.

The SINR is obtained by the first apparatus through measurement based on a pilot of a received signal in the frequency domain resource set, and the received signal is the sidelink data sent by a second apparatus to the first apparatus in the plurality of frequency domain resource sets on a plurality of carriers in a first slot. Alternatively, the SINR is an average SINR in a specific time period, for example, an L3 layer SINR obtained by using an alpha filtering method.

Manner 7: A first apparatus determines a candidate feedback resource in an earliest slot in at least one candidate feedback resource configured in at least one first frequency domain resource set as a feedback resource, where the at least one first frequency domain resource set is at least one frequency domain resource set with a smallest CBR in a plurality of frequency domain resource sets.

Manner 7 may also be described as follows: A feedback resource is determined in a first frequency domain resource set in a second slot, where a candidate feedback resource that can be used to send feedback information is configured in each of a plurality of frequency domain resource sets, the first frequency domain resource set is a frequency domain resource set with a smallest CBR that is in the plurality of frequency domain resource sets and in which a configured candidate feedback resource is located in an earliest slot, and the second slot is a slot in which the candidate feedback resource configured in the first frequency domain resource set is located.

In manner 7, the first apparatus may select, from the at least one candidate feedback resource configured in the at least one frequency domain resource set with the smallest CBR, the candidate feedback resource in the earliest slot as the feedback resource, so that a success rate of sending feedback information can be improved, thereby reducing a delay of sending the feedback information.

The CBR of the frequency domain resource set may be understood as a channel busy ratio measured by the first apparatus on a frequency domain resource set. A CBR at a moment N (a slot n) represents a proportion that is determined by the first apparatus in the slot n based on RSSI results of subchannels in all slots from a slot n-a to a slot n-1 that are measured in a previous time window [n-a, n-1] and that is of a subchannel RSSI that exceeds a threshold. The threshold is configured by a network device, and a parameter a that determines a lower limit of the time window may be 100, in a unit of slot. The RSSI represents a linear average value of received signals in a slot.

In Manner 6 and Manner 7, when slots in which candidate feedback resources configured in a plurality of frequency domain resource sets of a plurality of V2X communication resource pools are located are the same, which are all an earliest slot, the first apparatus may alternatively select, from the plurality of frequency domain resource sets in which the candidate feedback resources are located in the earliest slot, a frequency domain resource set with a largest SINR of receiving sidelink data or a smallest CBR as a first frequency domain resource set in which a feedback resource is located, and use a candidate feedback resource configured in the first frequency domain resource set as the feedback resource for sending feedback information, to improve a success rate of sending feedback information while reducing a delay of sending the feedback information.

Manner 8: A first apparatus determines, based on indication information from a second apparatus, a first frequency domain resource set in which a feedback resource is located, and uses a candidate feedback resource configured in the first frequency domain resource set as the feedback resource.

Specifically, the indication information may be sent by using control information, or may be sent by using RRC information, where the control information may be first-level control information or second-level control information. The control information may further include identification information of the second apparatus, and/or identification information of an aggregated carrier used by the second apparatus, for example, an index of the aggregated carrier.

SL includes two levels of control information: first control information and second-level control information. The first-level control information (1st-stage SCI) is sent on a PSCCH. The first-level control information includes information about a time-frequency resource occupied by a PSSCH corresponding to the PSCCH, information about a periodicity for transmitting the PSSCH and/or priority information of the PSSCH, a modulation and coding scheme (modulation and coding scheme, MCS) corresponding to PSSCH code, and the like. The second-level control information indicates some or all of the following items.

1. Hybrid automatic repeat request (hybrid automatic repeat request, HARQ) thread number (process number): When transmitted data is a data transport block (transmit block, TB) during retransmission, a HARQ thread number of the data remains unchanged.

2. New data indication (new data indicator, NDI) information: Indicates whether data transmitted on a current HARQ thread is new data or old data. The NDI is reversed when new data occurs. To be specific, if an NDI value on the HARQ thread is the same as a previous one, the transmitted data is retransmitted data of a previously transmitted TB. Otherwise, the transmitted data is a newly transmitted TB.

3. Redundancy version (redundancy version, RV): Indicates a HARQ version number of current data transmission. TB transmission supports four version numbers, to generate different rate matching outputs, carry different redundant information, and improve decoding reliability during combination of versions of different times of TB transmission.

4. Source address ID (source ID): Indicates a source of transmitted data.

5. Destination address ID (destination ID): Indicates an expected receiving ID of transmitted data.

6. HARQ-ACK enabling information: Indicates whether a receive end performs a HARQ-ACK feedback.

7. Service type indication information (cast type indicator): Indicates unicast, multicast, or broadcast.

8. Channel state information (channel state information, CSI) requirement: Indicates whether a transmit end is required to feed back CSI.

In the foregoing solution, the first apparatus decodes the control information (for example, the first control information and/or the second control information) from the second apparatus, and may determine, by using the indication information that is included in the control information and that can be used to determine the first frequency domain resource set in which the feedback resource is located, the first frequency domain resource set in which the feedback resource is located. The first apparatus uses the candidate feedback resource configured in the first frequency domain resource set as the feedback resource for sending feedback information.

Manner 9: A first apparatus determines, based on a frequency domain location at which control information in sidelink data sent by a second apparatus in a first slot is located, a first frequency domain resource set in which a feedback resource is located, and uses a candidate feedback resource configured in the first frequency domain resource set as the feedback resource.

For example, when sending the sidelink data in a plurality of frequency domain resource sets in the first slot, the second apparatus sends first-level control information or second-level control information in only one of the frequency domain resource sets. In this case, a frequency domain resource set in which the first-level control information or the second-level control information is located is the first frequency domain resource set in which the feedback resource is located. The first apparatus determines the candidate feedback resource configured in the first frequency domain resource set as the feedback resource.

The foregoing is described by using an example in which the first apparatus determines the feedback resource from the plurality of candidate feedback resources corresponding to the plurality of frequency domain resource sets. It may be understood that the second apparatus may also determine the feedback resource from the plurality of candidate feedback resources corresponding to the plurality of frequency domain resource sets in a manner the same as or similar to that of the first apparatus. Specifically, for an implementation of determining, by the second apparatus, the feedback resource from the plurality of candidate feedback resources corresponding to the plurality of frequency domain resource sets in the manner the same as or similar to that of the first apparatus, refer to an implementation of determining, by the first apparatus, the feedback resource from the plurality of candidate feedback resources corresponding to the plurality of frequency domain resource sets. Details are not described again.

SINRs of receiving sidelink data by the first apparatus in the plurality of frequency domain resource sets and CBRs of the plurality of frequency domain resource sets determined by the first apparatus may be sent by the first apparatus to the second apparatus.

In addition, it should be understood that, when the feedback resource includes two or more PRBs, and the second apparatus separately encodes the sidelink data sent to the first apparatus in the frequency domain resource sets of a plurality of V2X communication resource pools on a plurality of carriers, the first apparatus sends feedback information to the second apparatus on the feedback resource. In a possible implementation, when the feedback resource includes the two or more PRBs, in the two or more PRBs, all PSFCH sequence pairs (or a PSFCH sequence that carries ACK information or NACH information and that is in the PSFCH sequence pairs) may be arranged in ascending order of a frequency domain index and a code domain index; or all PSFCH sequence pairs (or a PSFCH sequence that carries ACK information or NACH information and that is in the PSFCH sequence pairs) are arranged in a similar manner.

For example, each PRB is configured with a maximum of six PSFCH sequence pairs for sending, and the feedback resource includes two PRBs. In this case, the feedback resource has a total of 6*2=12 pairs of PSFCH sequences that can be used for HARQ-ACK information feedback, and sequence pair numbers of the sequences are from 0 to 11. A PSFCH sequence pair whose index is 0 is mapped to the first PRB resource, and the sequence pair includes two PSFCH sequences generated based on two groups of parameters: $m_0 = 0$, $m_{CS} = 0$ and $m_0 = 0$, $m_{CS} = 6$; a PSFCH sequence pair whose index is 1 is mapped to the second PRB resource, and the sequence pair includes two PSFCH sequences generated based on two groups of parameters: $m_0 = 0$, $m_{CS} = 0$ and $m_0 = 0$, $m_{CS} = 6$; a PSFCH sequence whose index is 2 is mapped to the first PRB resource, the sequence pair includes two PSFCH sequences generated based on two groups of parameters: $m_0 = 1$, $m_{CS} = 0$ and $m_0 = 1$, $m_{CS} = 6$; and a PSFCH sequence whose index is 3 is mapped to the second PRB resource, and the sequence pair includes two PSFCH sequences generated based on two groups of parameters: $m_0 = 1$, $m_{CS} = 0$ and $m_0 = 1$, $m_{CS} = 6$. For how to generate the PSFCH sequence based on $m_0$ and $m_{CS}$, refer to the descriptions of the foregoing PSFCH sequence generation part. Details are not described again.

It may be understood that, to implement functions in the foregoing embodiments, the first apparatus and the second apparatus include corresponding hardware structures and/or software modules for performing the functions. A person skilled in the art should be easily aware that, with reference to the units and the method steps in the examples described in embodiments disclosed in this application, this application can be implemented by using hardware or a combination of hardware and computer software. Whether a function is performed by hardware or hardware driven by computer software depends on particular application scenarios and design constraints of the technical solutions. In embodiments of this application, a communication apparatus may be the first apparatus, the second apparatus, a chip used in the first apparatus or the second apparatus, or the like.

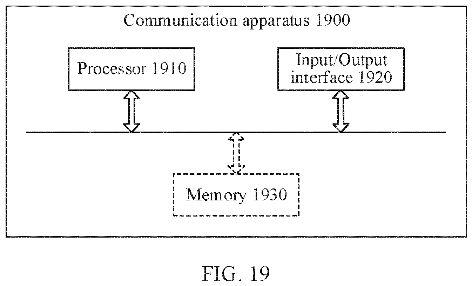

FIG. 18 and FIG. 19 are diagrams of structures of possible communication apparatuses according to embodiments of this application. These communication apparatuses may be configured to implement functions of the first apparatus or the second apparatus in the foregoing method embodiments, and therefore can also implement beneficial effects of the foregoing method embodiments.

As shown in FIG. 18, the communication apparatus 1800 includes a processing unit 1810 and an interface unit 1820. The communication apparatus 1800 is configured to implement functions of the first apparatus or the second apparatus in the method embodiment shown in FIG. 14.

When the communication apparatus 1800 is configured to implement the functions of the first apparatus in the method embodiment shown in FIG. 14,

the interface unit 1820 is configured to receive sidelink data from a second apparatus from a plurality of frequency domain resource sets on a plurality of carriers in a first slot, where each of the plurality of carriers includes at least one frequency domain resource set; the processing unit 1810 is configured to determine a feedback resource from a plurality of candidate feedback resources corresponding to the plurality of frequency domain resource sets, where a candidate feedback resource is configured in each of the plurality of frequency domain resource sets, the feedback resource belongs to one of the plurality of frequency domain resource sets in frequency domain, and the feedback resource is located in a second slot in time domain; and the interface unit 1820 is further configured to send feedback information of the sidelink data to the second apparatus on the feedback resource.

Alternatively, the interface unit 1820 is configured to receive sidelink data from a second apparatus from a plurality of frequency domain resource sets on a plurality of carriers in a first slot, where each of the plurality of carriers includes at least one frequency domain resource set; the processing unit 1810 is configured to determine a feedback resource, where the feedback resource belongs to one of the plurality of frequency domain resource sets in frequency domain, and the feedback resource is located in a second slot in time domain; and the interface unit 1820 is further configured to send feedback information of the sidelink data to the second apparatus on the feedback resource.

In a possible design, when determining the feedback resource from the plurality of candidate feedback resources corresponding to the plurality of frequency domain resource sets, the processing unit 1810 is specifically configured to determine a candidate feedback resource configured in a first frequency domain resource set as the feedback resource, where the first frequency domain resource set is a frequency domain resource set with a largest SINR of receiving the sidelink data in the plurality of frequency domain resource sets.

Alternatively, when determining the feedback resource, the processing unit 1810 is specifically configured to determine the feedback resource in a first frequency domain resource set in the second slot, where the first frequency domain resource set is a frequency domain resource set with a largest SINR of receiving the sidelink data in the plurality of frequency domain resource sets.

In a possible design, when determining the feedback resource from the plurality of candidate feedback resources corresponding to the plurality of frequency domain resource sets, the processing unit 1810 is specifically configured to determine a candidate feedback resource configured in a first frequency domain resource set as the feedback resource, where the first frequency domain resource set is a frequency domain resource set with a smallest CBR in the plurality of frequency domain resource sets.

Alternatively, when determining the feedback resource, the processing unit 1810 is specifically configured to determine the feedback resource in a first frequency domain resource set in the second slot, where the first frequency domain resource set is a frequency domain resource set with a smallest CBR in the plurality of frequency domain resource sets.

In a possible design, the interface unit 1820 is further configured to receive indication information from a network device, where the indication information indicates a first frequency domain resource set, and the first frequency domain resource set is one of the plurality of frequency domain resource sets; and when determining the feedback resource from the plurality of candidate feedback resources corresponding to the plurality of frequency domain resource sets, the processing unit 1810 is specifically configured to determine a candidate feedback resource configured in the first frequency domain resource set as the feedback resource.

Alternatively, the interface unit 1820 is further configured to receive indication information from a network device, where the indication information indicates a first frequency domain resource set, and the first frequency domain resource set is one of the plurality of frequency domain resource sets; and when determining the feedback resource, the processing unit 1810 is specifically configured to determine the feedback resource in the first frequency domain resource set in the second slot.

In a possible design, when determining the feedback resource from the plurality of candidate feedback resources corresponding to the plurality of frequency domain resource sets, the processing unit 1810 is specifically configured to determine a candidate feedback resource configured in a first frequency domain resource set as the feedback resource, where the first frequency domain resource set is a frequency domain resource set that is predefined in the plurality of frequency domain resource sets and that is used to send the feedback information.

Alternatively, when determining the feedback resource, the processing unit 1810 is specifically configured to determine the feedback resource in a first frequency domain resource set in the second slot, where the first frequency domain resource set is a frequency domain resource set that is predefined in the plurality of frequency domain resource sets and that is used to send the feedback information.

In a possible design, when determining the feedback resource from the plurality of candidate feedback resources corresponding to the plurality of frequency domain resource sets, the processing unit 1810 is specifically configured to determine a candidate feedback resource in an earliest slot in the plurality of candidate feedback resources as the feedback resource.

Alternatively, when determining the feedback resource, the processing unit 1810 is specifically configured to determine the feedback resource in a first frequency domain resource set in the second slot, where a candidate feedback resource that can be used to send the feedback information is configured in each of the plurality of frequency domain resource sets, the first frequency domain resource set is a frequency domain resource set that is in the plurality of frequency domain resource sets and in which a configured candidate feedback resource is located in an earliest slot, and the second slot is a slot in which the candidate feedback resource configured in the first frequency domain resource set is located.

In a possible design, when determining the feedback resource from the plurality of candidate feedback resources corresponding to the plurality of frequency domain resource sets, the processing unit 1810 is specifically configured to determine a candidate feedback resource in an earliest slot in at least one candidate feedback resource configured in at least one first frequency domain resource set as the feedback resource, where the at least one first frequency domain resource set is at least one frequency domain resource set with a largest SINR of receiving the sidelink data in the plurality of frequency domain resource sets.

Alternatively, when determining the feedback resource, the processing unit 1810 is specifically configured to determine the feedback resource in a first frequency domain resource set in the second slot, where a candidate feedback resource that can be used to send the feedback information is configured in each of the plurality of frequency domain resource sets, the first frequency domain resource set is a frequency domain resource set with a largest SINR of receiving the sidelink data that is in the plurality of frequency domain resource sets and in which a configured candidate feedback resource is located in an earliest slot, and the second slot is a slot in which the candidate feedback resource configured in the first frequency domain resource set is located.

In a possible design, when determining the feedback resource from the plurality of candidate feedback resources corresponding to the plurality of frequency domain resource sets, the processing unit 1810 is specifically configured to determine a candidate feedback resource in an earliest slot in at least one candidate feedback resource configured in at least one first frequency domain resource set as the feedback resource, where the at least one first frequency domain resource set is at least one frequency domain resource set with a smallest CBR in the plurality of frequency domain resource sets.

Alternatively, when determining the feedback resource, the processing unit 1810 is specifically configured to determine the feedback resource in a first frequency domain resource set in the second slot, where a candidate feedback resource that can be used to send the feedback information is configured in each of the plurality of frequency domain resource sets, the first frequency domain resource set is a frequency domain resource set with a smallest CBR that is in the plurality of frequency domain resource sets and in which a configured candidate feedback resource is located in an earliest slot, and the second slot is a slot in which the candidate feedback resource configured in the first frequency domain resource set is located.

When the communication apparatus 1800 is configured to implement the functions of the second apparatus in the method embodiment shown in FIG. 14,
the interface unit 1820 is configured to send sidelink data to a first apparatus in a plurality of frequency domain resource sets on a plurality of carriers in a first slot, where each of the plurality of carriers includes at least one frequency domain resource set; the processing unit 1810 is configured to determine a feedback resource from a plurality of candidate feedback resources corresponding to the plurality of frequency domain resource sets, where a candidate feedback resource is configured in each of the plurality of frequency domain resource sets, the feedback resource belongs to one of the plurality of frequency domain resource sets in frequency domain, and the feedback resource is located in a second slot in time domain; and the interface unit 1820 is further configured to receive feedback information of the sidelink data from the first apparatus on the feedback resource.

Alternatively, the interface unit 1820 is configured to send sidelink data to a first apparatus in a plurality of frequency domain resource sets on a plurality of carriers in a first slot, where each of the plurality of carriers includes at least one frequency domain resource set, the processing unit 1810 is configured to determine a feedback resource, where the feedback resource belongs to one of the plurality of frequency domain resource sets in frequency domain, and the feedback resource is located in a second slot in time domain; and the interface unit 1820 is further configured to receive feedback information of the sidelink data from the first apparatus on the feedback resource.

In a possible design, the interface unit 1820 is further configured to receive SINR information from the first apparatus, where the SINR information includes an SINR of receiving the sidelink data by the first apparatus in each of the plurality of frequency domain resource sets; and when determining the feedback resource from the plurality of candidate feedback resources corresponding to the plurality of frequency domain resource sets, the processing unit 1810 is specifically configured to determine a candidate feedback resource configured in a first frequency domain resource set as the feedback resource, where the first frequency domain resource set is a frequency domain resource set with a largest SINR in the plurality of frequency domain resource sets.

Alternatively, the interface unit 1820 is further configured to receive SINR information from the first apparatus, where the SINR information includes an SINR of receiving the sidelink data by the first apparatus in each of the plurality of frequency domain resource sets; and when determining the feedback resource, the processing unit 1810 is specifically configured to determine the feedback resource in a first frequency domain resource set in the second slot, where the first frequency domain resource set is a frequency domain resource set with a largest SINR in the plurality of frequency domain resource sets.

In a possible design, the interface unit 1820 is further configured to receive CBR information from the first apparatus, where the CBR information includes a CBR of each of the plurality of frequency domain resource sets; and when determining the feedback resource from the plurality of candidate feedback resources corresponding to the plurality of frequency domain resource sets, the processing unit 1810 is specifically configured to determine a candidate feedback resource configured in a first frequency domain resource set as the feedback resource, where the first frequency domain resource set is a frequency domain resource set with a smallest CBR in the plurality of frequency domain resource sets.

Alternatively, the interface unit 1820 is further configured to receive CBR information from the first apparatus, where the CBR information includes a CBR of each of the plurality of frequency domain resource sets; and when determining the feedback resource, the processing unit 1810 is specifically configured to determine the feedback resource in a first frequency domain resource set in the second slot, where the first frequency domain resource set is a frequency domain resource set with a smallest CBR in the plurality of frequency domain resource sets.

In a possible design, the interface unit 1820 is further configured to receive indication information from a network device, where the indication information indicates a first frequency domain resource set, and the first frequency domain resource set is one of the plurality of frequency domain resource sets; and when determining the feedback resource from the plurality of candidate feedback resources corresponding to the plurality of frequency domain resource sets, the processing unit 1810 is specifically configured to determine a candidate feedback resource configured in the first frequency domain resource set as the feedback resource.

Alternatively, the interface unit 1820 is further configured to receive indication information from a network device, where the indication information indicates a first frequency domain resource set, and the first frequency domain resource set is one of the plurality of frequency domain resource sets; and when determining the feedback resource, the processing unit 1810 is specifically configured to determine the feedback resource in the first frequency domain resource set in the second slot.

In a possible design, when determining the feedback resource from the plurality of candidate feedback resources corresponding to the plurality of frequency domain resource sets, the processing unit 1810 is specifically configured to determine a candidate feedback resource configured in a first frequency domain resource set as the feedback resource, where the first frequency domain resource set is a frequency domain resource set that is predefined in the plurality of frequency domain resource sets and that is used to send the feedback information.

Alternatively, when determining the feedback resource, the processing unit 1810 is specifically configured to determine the feedback resource in a first frequency domain resource set in the second slot, where the first frequency domain resource set is a frequency domain resource set that is predefined in the plurality of frequency domain resource sets and that is used to send the feedback information.

In a possible design, when determining the feedback resource from the plurality of candidate feedback resources corresponding to the plurality of frequency domain resource sets, the processing unit 1810 is specifically configured to determine a candidate feedback resource in an earliest slot in the plurality of candidate feedback resources as the feedback resource.

Alternatively, when determining the feedback resource, the processing unit 1810 is specifically configured to determine the feedback resource in a first frequency domain resource set in the second slot, where a candidate feedback resource that can be used to send the feedback information is configured in each of the plurality of frequency domain resource sets, the first frequency domain resource set is a frequency domain resource set that is in the plurality of frequency domain resource sets and in which a configured candidate feedback resource is located in an earliest slot, and the second slot is a slot in which the candidate feedback resource configured in the first frequency domain resource set is located.

In a possible design, the interface unit 1820 is further configured to receive SINR information from the first apparatus, where the SINR information includes an SINR of receiving the sidelink data by the first apparatus in each of the plurality of frequency domain resource sets; and when determining the feedback resource from the plurality of candidate feedback resources corresponding to the plurality of frequency domain resource sets, the processing unit 1810 is specifically configured to determine a candidate feedback resource in an earliest slot in at least one candidate feedback resource configured in at least one first frequency domain resource set as the feedback resource, where the at least one first frequency domain resource set is at least one frequency domain resource set with a largest SINR in the plurality of frequency domain resource sets.

Alternatively, the interface unit 1820 is further configured to receive signal to noise ratio SINR information from the first apparatus, where the SINR information includes an SINR of receiving the sidelink data by the first apparatus in each of the plurality of frequency domain resource sets; and Alternatively, when determining the feedback resource, the processing unit 1810 is specifically configured to determine the feedback resource in a first frequency domain resource set in the second slot, where a candidate feedback resource that can be used to send the feedback information is configured in each of the plurality of frequency domain resource sets, the first frequency domain resource set is a frequency domain resource set with a largest SINR that is in the plurality of frequency domain resource sets and in which a configured candidate feedback resource is located in an earliest slot, and the second slot is a slot in which the candidate feedback resource configured in the first frequency domain resource set is located.

In a possible design, the interface unit 1820 is further configured to receive CBR information from the first apparatus, where the CBR information includes a CBR of each of the plurality of frequency domain resource sets; and when determining the feedback resource from the plurality of candidate feedback resources corresponding to the plurality of frequency domain resource sets, the processing unit 1810 is specifically configured to determine a candidate feedback resource in an earliest slot in at least one candidate feedback resource configured in at least one first frequency domain resource set as the feedback resource, where the at least one first frequency domain resource set is at least one frequency domain resource set with a smallest CBR in the plurality of frequency domain resource sets.

Alternatively, the interface unit 1820 is further configured to receive CBR information from the first apparatus, where the CBR information includes a CBR of each of the plurality of frequency domain resource sets; and when determining the feedback resource, the processing unit 1810 is specifically configured to determine the feedback resource in a first frequency domain resource set in the second slot, where a candidate feedback resource that can be used to send the feedback information is configured in each of the plurality of frequency domain resource sets, the first frequency domain resource set is a frequency domain resource set with a smallest CBR that is in the plurality of frequency domain resource sets and in which a configured candidate feedback resource is located in an earliest slot, and the second slot is a slot in which the candidate feedback resource configured in the first frequency domain resource set is located.

As shown in FIG. 19, the communication apparatus 1900 includes a processor 1910 and an input/output interface 1920. The processor 1910 and the input/output interface 1920 are coupled to each other. It may be understood that the input/output interface 1920 may be a transceiver or an input/output interface. Optionally, the communication apparatus 1900 may further include a memory 1930, configured to store instructions executed by the processor 1910, or store input data required by the processor 1910 to run the instructions, or store data generated after the processor 1910 runs the instructions.

When the communication apparatus 1900 is configured to implement the method shown in FIG. 14, the processor 1910 is configured to implement functions of the foregoing processing unit 1810, and the input/output interface 1920 is configured to implement functions of the foregoing interface unit 1820.

When the communication apparatus is a chip used in the second apparatus, the second apparatus chip implements the functions of the second apparatus in the foregoing method embodiments. The second apparatus chip receives information from another module (for example, a radio frequency module or an antenna) in the second apparatus, where the information is sent by the first apparatus to the second apparatus. Alternatively, the second apparatus chip sends information to another module (for example, a radio frequency module or an antenna) in the second apparatus, where the information is sent by the second apparatus to the first apparatus.

When the communication apparatus is a chip used in the first apparatus, the first apparatus chip implements the functions of the first apparatus in the foregoing method embodiments. The first apparatus chip receives information from another module (for example, a radio frequency module or an antenna) in the first apparatus, where the information is sent by the second apparatus to the first apparatus. Alternatively, the first apparatus chip sends information to another module (for example, a radio frequency module or an antenna) in the second apparatus, where the information is sent by the first apparatus to the second apparatus.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any regular processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a

27

read-only memory, a programmable read-only memory, an erasable programmable read-only memory, an electrically erasable programmable read-only memory, a register, a hard disk drive, a removable hard disk drive, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist as discrete components in the network device or the terminal device.

All or some of the foregoing embodiments may be implemented by using software, hardware, firmware, or any combination thereof. When the software is used to implement the embodiments, all or some of the embodiments may be implemented in a form of a computer program product. The computer program product includes one or more computer programs or instructions. When the computer programs or the instructions are loaded and executed on a computer, all or some of the procedures or the functions in embodiments of this application are executed. The computer may be a general-purpose computer, a dedicated computer, a computer network, a network device, user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, such as a floppy disk, a hard disk, or a magnetic tape. Alternatively, the usable medium may be an optical medium, for example, a digital video disc. Alternatively, the usable medium may be a semiconductor medium, for example, a solid state drive. The computer-readable storage medium may be a volatile or non-volatile storage medium, or may include both the volatile storage medium and the non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In addition, it should be understood that the term "for example" in embodiments of this application is used to represent giving an example, an illustration, or a description. Any embodiment or design scheme described as an "example" in this application should not be explained as being more preferred or having more advantages than another embodiment or design scheme. Exactly, the term "for example" is used to present a concept in a specific manner. Ordinal numerals such as "first" and "second" mentioned in embodiments of this application are used to distinguish between a plurality of objects, and are not intended to limit sizes, content, a sequence, a time sequence, priorities, importance degrees, or the like of the plurality of obj ects. For example, a first threshold and a second threshold may be a same threshold, or may be different thresholds. In addition, this type of name does not represent that values, corresponding parameters, priorities, importance degrees, or the like of the two thresholds are different.

In addition, in embodiments of this application, information (information), a signal (signal), a message (message), and a channel (channel) may be interchangeably used sometimes. It should be noted that meanings expressed by the terms are consistent when differences of the terms are not emphasized. "Of (of)", "corresponding (corresponding, relevant)", and "corresponding (corresponding)" may be interchangeably used sometimes. It should be noted that meanings expressed by the terms are consistent when differences of the terms are not emphasized.

In this application, "at least one" means one or more, and "a plurality of means two or more. "And/or" describes an association relationship between associated objects, and represents that three relationships may exist. For example, A and/or B may represent the following cases: A exists alone, both A and B exist, and B exists alone, where A and B may be singular or plural. In text descriptions of this application, the character "/" generally represents an "or" relationship between associated objects. In a formula of this application, the character "/" represents a "division" relationship between associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean execution sequences, and the execution sequences of the processes should be determined based on functions and internal logic of the processes.

**Claims**

1. A communication method, comprising:

receiving sidelink data from a second apparatus from a plurality of frequency domain resource sets on a plurality of carriers in a first slot, wherein each of the plurality of carriers comprises at least one frequency domain resource set;

determining a feedback resource from a plurality of candidate feedback resources corresponding to the plurality of frequency domain resource sets, wherein a candidate feedback resource is configured in each of the plurality of frequency domain resource sets, the feedback resource belongs to one of the plurality of frequency domain resource sets in frequency domain, and the feedback resource is located in a second slot in time domain; and

sending feedback information of the sidelink data to the second apparatus on the feedback resource.

2. The method according to claim 1, wherein the determining a feedback resource from a plurality of candidate feedback resources corresponding to the plurality of frequency domain resource sets comprises:

determining a candidate feedback resource configured in a first frequency domain resource set as the feedback resource, wherein the first frequency domain resource set is a frequency domain resource set with a largest signal to noise ratio SINR of receiving the sidelink data in the plurality of frequency domain resource sets.

3. The method according to claim 1, wherein the determining a feedback resource from a plurality of candidate feedback resources corresponding to the plurality of frequency domain resource sets comprises:

determining a candidate feedback resource configured in a first frequency domain resource set as the feedback resource, wherein the first frequency domain resource set is a frequency domain resource set with a smallest channel busy ratio CBR in the plurality of frequency domain resource sets.

4. The method according to claim 1, wherein the method further comprises:

receiving indication information from a network device, wherein the indication information indicates a first frequency domain resource set, and the first frequency domain resource set is one of the plurality of frequency domain resource sets; and

the determining a feedback resource from a plurality of candidate feedback resources corresponding to the plurality of frequency domain resource sets comprises:

determining a candidate feedback resource configured in the first frequency domain resource set as the feedback resource.

5. The method according to claim 1, wherein the determining a feedback resource from a plurality of candidate feedback resources corresponding to the plurality of frequency domain resource sets comprises:

determining a candidate feedback resource configured in a first frequency domain resource set as the feedback resource, wherein the first frequency domain resource set is a frequency domain resource set that is predefined in the plurality of frequency domain resource sets and that is used to send the feedback information.

6. The method according to any one of claims 1 to 3, wherein the determining a feedback resource from a plurality of candidate feedback resources corresponding to the plurality of frequency domain resource sets comprises:

determining a candidate feedback resource in an earliest slot in the plurality of candidate feedback resources as the feedback resource.

7. A communication method, comprising:

sending sidelink data to a first apparatus in a plurality of frequency domain resource sets on a plurality of carriers in a first slot, wherein each of the plurality of carriers comprises at least one frequency domain resource set;

determining a feedback resource from a plurality of candidate feedback resources corresponding to the plurality of frequency domain resource sets, wherein a candidate feedback resource is configured in each of the plurality of frequency domain resource sets, the feedback resource belongs to one of the plurality of frequency domain resource sets in frequency domain, and the feedback resource is located in a second slot in time domain; and

receiving feedback information of the sidelink data from the first apparatus on the feedback resource.

8. The method according to claim 7, wherein the method further comprises:

receiving signal to noise ratio SINR information from the first apparatus, wherein the SINR information comprises an SINR of receiving the sidelink data by the first apparatus in each of the plurality of frequency domain resource sets; and

the determining a feedback resource from a plurality of candidate feedback resources corresponding to the plurality of frequency domain resource sets comprises:

determining a candidate feedback resource configured in a first frequency domain resource set as the feedback resource, wherein the first frequency domain resource set is a frequency domain resource set with a largest SINR in the plurality of frequency domain resource sets.

9. The method according to claim 7, wherein the method further comprises:

receiving channel busy ratio CBR information from the first apparatus, wherein the CBR information comprises a CBR of each of the plurality of frequency domain resource sets; and
the determining a feedback resource from a plurality of candidate feedback resources corresponding to the plurality of frequency domain resource sets comprises:
determining a candidate feedback resource configured in a first frequency domain resource set as the feedback resource, wherein the first frequency domain resource set is a frequency domain resource set with a smallest CBR in the plurality of frequency domain resource sets.

10. The method according to claim 7, wherein the method further comprises:

receiving indication information from a network device, wherein the indication information indicates a first frequency domain resource set, and the first frequency domain resource set is one of the plurality of frequency domain resource sets; and
the determining a feedback resource from a plurality of candidate feedback resources corresponding to the plurality of frequency domain resource sets comprises:
determining a candidate feedback resource configured in the first frequency domain resource set as the feedback resource.

11. The method according to claim 7, wherein the determining a feedback resource from a plurality of candidate feedback resources corresponding to the plurality of frequency domain resource sets comprises:
determining a candidate feedback resource configured in a first frequency domain resource set as the feedback resource, wherein the first frequency domain resource set is a frequency domain resource set that is predefined in the plurality of frequency domain resource sets and that is used to send the feedback information.

12. The method according to any one of claims 7 to 9, wherein the determining a feedback resource from a plurality of candidate feedback resources corresponding to the plurality of frequency domain resource sets comprises:
determining a candidate feedback resource in an earliest slot in the plurality of candidate feedback resources as the feedback resource.

13. A communication apparatus, comprising an interface unit and a processing unit, wherein

the interface unit is configured to receive sidelink data from a second apparatus from a plurality of frequency domain resource sets on a plurality of carriers in a first slot, wherein each of the plurality of carriers comprises at least one frequency domain resource set;
the processing unit is configured to determine a feedback resource from a plurality of candidate feedback resources corresponding to the plurality of frequency domain resource sets, wherein a candidate feedback resource is configured in each of the plurality of frequency domain resource sets, the feedback resource belongs to one of the plurality of frequency domain resource sets in frequency domain, and the feedback resource is located in a second slot in time domain; and
the interface unit is further configured to send feedback information of the sidelink data to the second apparatus on the feedback resource.

14. The apparatus according to claim 13, wherein when determining the feedback resource from the plurality of candidate feedback resources corresponding to the plurality of frequency domain resource sets, the processing unit is specifically configured to determine a candidate feedback resource configured in a first frequency domain resource set as the feedback resource, wherein the first frequency domain resource set is a frequency domain resource set with a largest signal to noise ratio SINR of receiving the sidelink data in the plurality of frequency domain resource sets.

15. The apparatus according to claim 13, wherein when determining the feedback resource from the plurality of candidate feedback resources corresponding to the plurality of frequency domain resource sets, the processing unit is specifically configured to determine a candidate feedback resource configured in a first frequency domain resource set as the feedback resource, wherein the first frequency domain resource set is a frequency domain resource set with a smallest channel busy ratio CBR in the plurality of frequency domain resource sets.

16. The apparatus according to claim 13, wherein the interface unit is further configured to receive indication information from a network device, wherein the indication information indicates a first frequency domain resource set, and the first frequency domain resource set is one of the plurality of frequency domain resource sets; and
when determining the feedback resource from the plurality of candidate feedback resources corresponding to the plurality of frequency domain resource sets, the processing unit is specifically configured to determine a candidate feedback resource configured in the first frequency domain resource set as the feedback resource.

17. The apparatus according to claim 13, wherein when determining the feedback resource from the plurality of candidate feedback resources corresponding to the plurality of frequency domain resource sets, the processing unit is specifically configured to determine a candidate feedback resource configured in a first frequency domain resource set as the feedback resource, wherein the first frequency domain resource set is a frequency domain resource set that is predefined in the plurality of frequency domain resource sets and that is used to send the feedback information.

18. The apparatus according to any one of claims 13 to 15, wherein when determining the feedback resource from the plurality of candidate feedback resources corresponding to the plurality of frequency domain resource sets, the processing unit is specifically configured to determine a candidate feedback resource in an earliest slot in the plurality of candidate feedback resources as the feedback resource.

19. A communication apparatus, comprising an interface unit and a processing unit, wherein

the interface unit is configured to send sidelink data to a first apparatus in a plurality of frequency domain resource sets on a plurality of carriers in a first slot, wherein each of the plurality of carriers comprises at least one frequency domain resource set;
the processing unit is configured to determine a feedback resource from a plurality of candidate feedback resources corresponding to the plurality of frequency domain resource sets, wherein a candidate feedback resource is configured in each of the plurality of frequency domain resource sets, the feedback resource belongs to one of the plurality of frequency domain resource sets in frequency domain, and the feedback resource is located in a second slot in time domain; and
the interface unit is further configured to receive feedback information of the sidelink data from the first apparatus on the feedback resource.

20. The apparatus according to claim 19, wherein the interface unit is further configured to receive signal to noise ratio SINR information from the first apparatus, wherein the SINR information comprises an SINR of receiving the sidelink data by the first apparatus in each of the plurality of frequency domain resource sets; and
when determining the feedback resource from the plurality of candidate feedback resources corresponding to the plurality of frequency domain resource sets, the processing unit is specifically configured to determine a candidate feedback resource configured in a first frequency domain resource set as the feedback resource, wherein the first frequency domain resource set is a frequency domain resource set with a largest SINR in the plurality of frequency domain resource sets.

21. The apparatus according to claim 19, wherein the interface unit is further configured to receive channel busy ratio CBR information from the first apparatus, wherein the CBR information comprises a CBR of each of the plurality of frequency domain resource sets; and
when determining the feedback resource from the plurality of candidate feedback resources corresponding to the plurality of frequency domain resource sets, the processing unit is specifically configured to determine a candidate feedback resource configured in a first frequency domain resource set as the feedback resource, wherein the first frequency domain resource set is a frequency domain resource set with a smallest CBR in the plurality of frequency domain resource sets.

22. The apparatus according to claim 19, wherein the interface unit is further configured to receive indication information from a network device, wherein the indication information indicates a first frequency domain resource set, and the first frequency domain resource set is one of the plurality of frequency domain resource sets; and
when determining the feedback resource from the plurality of candidate feedback resources corresponding to the plurality of frequency domain resource sets, the processing unit is specifically configured to determine a candidate feedback resource configured in the first frequency domain resource set as the feedback resource.

**23.** The apparatus according to claim 19, wherein when determining the feedback resource from the plurality of candidate feedback resources corresponding to the plurality of frequency domain resource sets, the processing unit is specifically configured to determine a candidate feedback resource configured in a first frequency domain resource set as the feedback resource, wherein the first frequency domain resource set is a frequency domain resource set that is predefined in the plurality of frequency domain resource sets and that is used to send the feedback information.

**24.** The apparatus according to any one of claims 19 to 21, wherein when determining the feedback resource from the plurality of candidate feedback resources corresponding to the plurality of frequency domain resource sets, the processing unit is specifically configured to determine a candidate feedback resource in an earliest slot in the plurality of candidate feedback resources as the feedback resource.

**25.** A communication apparatus, comprising a processor, wherein the processor is configured to perform the method according to any one of claims 1 to 6.

**26.** A communication apparatus, comprising a processor, wherein the processor is configured to perform the method according to any one of claims 7 to 12.

**27.** A computer program product, comprising program code, wherein when the program code is executed, the method according to any one of claims 1 to 12 is implemented.

**28.** A computer-readable storage medium, wherein the storage medium stores a computer program or instructions; and when the computer program or the instructions are executed, the method according to any one of claims 1 to 12 is implemented.

102

103

104

V2P

V2V

V2I

101

FIG. 1

Network
device

Downlink control
information

Terminal
device
(transmit end)

Sidelink control
information and/
or sidelink data

Terminal
device
(receive end)

FIG. 2

FIG. 3

| Bitmap (11001110) | | | | Bitmap (repeated) | | | | Bitmap (repeated) | | |
|---|---|---|---|---|---|---|---|---|---|---|
| Subframe 0 | Subframe 1 | ... | Subframe 7 | Subframe 8 | Subframe 9 | ... | Subframe 15 | Subframe 16 | ... | Subframe N |

FIG. 4

Bitmap: 11001110

Subframe
available for V2X
communication

Normal subframe

Frequency
band

Subchannel 1   $n_{CH}$

Sequence number
of the first
resource block

Subchannel 2   $n_{CH}$

...

Subchannel N   $n_{CH}$

FIG. 5

V2X communication
resource pool

A PSFCH
periodicity is 1

V2X communication
resource pool

A PSFCH
periodicity is 2

V2X communication
resource pool

A PSFCH
periodicity is 4

One SL slot

One SL slot

One symbol

PSSCH          PSFCH          GAP

FIG. 6

FIG. 7

FIG. 8

FIG. 9

Frequency domain
(subchannel)

Time domain
(slot)

Numbers of PSFCH
feedback resources
corresponding to the
first four PRBs that can
be used as the PSFCH
feedback resources in
each subchannel

FIG. 10

FIG. 11

FIG. 12

FIG. 13

First apparatus

Second apparatus

S1401: The first apparatus receives sidelink data
from the second apparatus from a plurality of
frequency domain resource sets on a plurality of
carriers in a first slot, and correspondingly, the
second apparatus sends the sidelink data

S1402: The first apparatus determines a
feedback resource from a plurality of
candidate feedback resources
corresponding to the plurality of
frequency domain resource sets

S1403: The first apparatus sends feedback information of
the sidelink data to the second apparatus on the feedback
resource, and correspondingly, the second apparatus
receives the feedback information

FIG. 14

Bitmap (11001110)

Bitmap (repeated)

Bitmap (repeated)

| Subframe 0 | Subframe 1 | … | Subframe 7 | Subframe 8 | Subframe 9 | … | Subframe 15 | Subframe 16 | … | Subframe N |

Bitmap: 11001110

Subframe available for V2X communication

Normal subframe

Carrier 0  0 1 2 3 4 5 6 7 8 9 10 11 12 12 14 15 …

Carrier 1  0 1 2 3 4 5 6 7 8 9 10 11 12 12 14 15 …

Carrier 2  0 1 2 3 4 5 6 7 8 9 10 11 12 12 14 15 …

FIG. 15

FIG. 16

FIG. 17

FIG. 18

FIG. 19

## INTERNATIONAL SEARCH REPORT

| International application No. |
| --- |
| **PCT/CN2022/130887** |

**A. CLASSIFICATION OF SUBJECT MATTER**

H04W 72/04(2009.01)i

According to International Patent Classification (IPC) or to both national classification and IPC

**B. FIELDS SEARCHED**

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; 3GPP: 载波聚合, 载波分量, 成员载波, 旁路, 侧路, 设备到设备, 车与车, 反馈, 信噪比, 繁忙程度, 信号强度, 物理侧行链路反馈信道, CA, carrier aggregation, CC, component carrier, SL, sidelink, D2D, V2V, harq, CBR, SINR, SNR, RSRP, RSS, PSFCH

**C. DOCUMENTS CONSIDERED TO BE RELEVANT**

| Category* | Citation of document, with indication, where appropriate, of the relevant passages | Relevant to claim No. |
| --- | --- | --- |
| X | WO 2021134796 A1 (GUANGDONG OPPO MOBILE COMMUNICATIONS CO., LTD.) 08 July 2021 (2021-07-08) description, page 4, line 26 to page 10, line 8, and figures 5-12 | 1-28 |
| X | CN 113678392 A (IDAC HOLDINGS, INC.) 19 November 2021 (2021-11-19) description, paragraphs 63-151 | 1-28 |
| A | CN 113498176 A (VIVO COMMUNICATION TECHNOLOGY CO., LTD.) 12 October 2021 (2021-10-12) entire document | 1-28 |
| A | CN 113132037 A (VIVO COMMUNICATION TECHNOLOGY CO., LTD.) 16 July 2021 (2021-07-16) entire document | 1-28 |
| A | CN 111970094 A (CHINA ACADEMY OF INFORMATION AND COMMUNICATIONS TECHNOLOGY) 20 November 2020 (2020-11-20) entire document | 1-28 |
| A | US 2021099974 A1 (QUALCOMM INC.) 01 April 2021 (2021-04-01) entire document | 1-28 |

☑ Further documents are listed in the continuation of Box C.     ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **03 January 2023** | **20 January 2023** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/130887**

C.      DOCUMENTS CONSIDERED TO BE RELEVANT

| Category* | Citation of document, with indication, where appropriate, of the relevant passages | Relevant to claim No. |
|---|---|---|
| A | APPLE. "On Rel-18 Sidelink Enhancement"<br>*3GPP TSG RAN Meeting #93-e RP-212451*, 06 September 2021 (2021-09-06),<br>entire document | 1-28 |

Form PCT/ISA/210 (second sheet) (January 2015)

INTERNATIONAL SEARCH REPORT

Information on patent family members

International application No.

**PCT/CN2022/130887**

| Patent document cited in search report | | | Publication date (day/month/year) | Patent family member(s) | | | Publication date (day/month/year) |
|---|---|---|---|---|---|---|---|
| WO | 2021134796 | A1 | 08 July 2021 | EP | 4087309 | A1 | 09 November 2022 |
| | | | | US | 2022329368 | A1 | 13 October 2022 |
| | | | | CN | 114830715 | A | 29 July 2022 |
| CN | 113678392 | A | 19 November 2021 | TW | 202102032 | A | 01 January 2021 |
| | | | | WO | 2020210333 | A1 | 15 October 2020 |
| | | | | US | 2022201654 | A1 | 23 June 2022 |
| | | | | KR | 20220006043 | A | 14 January 2022 |
| | | | | EP | 3954076 | A1 | 16 February 2022 |
| | | | | BR | 112021020293 | A2 | 14 December 2021 |
| | | | | IN | 202117045685 | A | 28 January 2022 |
| | | | | VN | 86121 | A | 25 May 2022 |
| CN | 113498176 | A | 12 October 2021 | WO | 2021197421 | A1 | 07 October 2021 |
| CN | 113132037 | A | 16 July 2021 | WO | 2021143684 | A1 | 22 July 2021 |
| CN | 111970094 | A | 20 November 2020 | None | | | |
| US | 2021099974 | A1 | 01 April 2021 | WO | 2021066968 | A1 | 08 April 2021 |
| | | | | US | 11375476 | B2 | 28 June 2022 |

Form PCT/ISA/210 (patent family annex) (January 2015)

**EP 4 422 316 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202111406834